# EUROPÄISCHE PATENTSCHRIFT

(11) **EP 3 728 905 B1**
(45) Veröffentlichungstag und Bekanntmachung des Hinweises auf die Patenterteilung: **16.02.2022**
(21) Anmeldenummer: 18830433.1
(22) Anmeldetag: 17.12.2018
(51) Int. Cl.: F16H 61/12, F16H 61/02, F16H 61/686

(54) **VENTILSYSTEM FÜR EINE HYDRAULISCHE NOTFAHRGANGFUNKTION EINES KRAFTFAHRZEUG-AUTOMATIKGETRIEBES**
VALVE SYSTEM FOR A HYDRAULIC EMERGENCY TRAVEL GEAR FUNCTION OF AN AUTOMATIC TRANSMISSION FOR A MOTOR VEHICLE
SYSTÈME DE SOUPAPES POUR UNE FONCTION HYDRAULIQUE DE MARCHE D'URGENCE D'UNE TRANSMISSION AUTOMATIQUE DE VÉHICULE AUTOMOBILE

(30) Priorität: 18.12.2017 DE 102017223015
(43) Veröffentlichungstag der Anmeldung: 28.10.2020
(73) Patentinhaber: ZF Friedrichshafen AG, 88046 Friedrichshafen (DE)
(72) Erfinder: HERRMANN, Markus, 88175 Scheidegg (DE); SCHMIDT, Thilo, 88074 Meckenbeuren (DE); HABERSTOCK, Alexander, 88212 Ravensburg (DE); HANDRICH, Adriano, 88045 Friedrichshafen (DE)
(86) Internationale Anmeldenummer: PCT/EP2018/085133
(87) Internationale Veröffentlichungsnummer: WO 2019/121467

(56) Entgegenhaltungen:
- DE-A1- 10 045 556
- DE-A1-102005 012 586

## Beschreibung

Die Erfindung betrifft ein Ventilsystem für eine hydraulische Notfahrgangfunktion eines Kraftfahrzeug-Automatikgetriebes sowie ein Verfahren zur Diagnose des Ventilsystems. Weitere Ansprüche sind auf ein Automatikgetriebe mit dem Ventilsystem sowie auf ein Kraftfahrzeug mit dem Automatikgetriebe gerichtet.

Bei einem Automatikgetriebe eines Kraftfahrzeugs kann der Fall eintreten, dass eine Getriebesteuerung bzw. eine Spannungsversorgung des Automatikgetriebes ausfällt. Es besteht das Bedürfnis, in diesem Fall über einen Notfahrgang die Fahrzeugverfügbarkeit zu steigern bzw. weiterhin aufrecht zu erhalten, damit das Kraftfahrzeug z.B. noch aus einer Gefahrensituation bewegt werden kann. In diesem Zusammenhang sind Systeme mit E-Schaltung bekannt, welche abhängig von einer Getriebeposition - vor einem Einfall in einen Notlaufbetrieb - einen hydraulischen Notfahrgang zur Verfügung stellen. Dabei wird der Notfahrgang vor Einfall in den Notlaufbetrieb hydraulisch gespeichert, aber erst mit dem Einfall in den Notlaufbetrieb aktiviert. Weiterhin sind Systeme für einen hydraulischen Notfahrgang bekannt, welche sich jedoch relativ komplex gestalten. Zudem wirken sich solche Systeme nachteilig auf den Verbrauch des Kraftfahrzeugs aus, da durch ein entsprechendes Ventilsystem und eine Aktuatorik die Leckageverluste und der Strombedarf des Automatikgetriebes erhöht werden. Zudem erzeugen die zusätzlichen Ventile Mehrkosten und einen erhöhten Bauraumbedarf in einem hydraulischen Schaltgerät des Automatikgetriebes. Solche Systeme für eine hydraulische Notfahrgangfunktion sind beispielsweise aus der DE 10 2005 012 586 A1 oder der DE 100 45 556 A1 bekannt.

Eine Aufgabe der vorliegenden Erfindung kann darin gesehen werden, ein möglichst kostengünstiges und bauraumsparendes Ventilsystem für eine hydraulische Notfahrgangfunktion eines Kraftfahrzeug-Automatikgetriebes bereitzustellen, wobei das Ventilsystem die hydraulische Notfahrgangfunktion ohne gravierende Verbrauchsnachteile ermöglicht.

Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Gemäß einem ersten Aspekt der Erfindung wird ein Ventilsystem für eine hydraulische Notfahrgangfunktion eines Kraftfahrzeug-Automatikgetriebes bereitgestellt. Das Ventilsystem umfasst ein Positionsventil mit einem ersten Kolbenschieber und einen elektromagnetischen Druckregler mit fallender Kennliniencharakteristik.

Der erste Kolbenschieber kann in eine erste Stellung und in eine zweite Stellung gebracht werden, wobei der erste Kolbenschieber in der ersten Stellung vorgespannt ist. Zum Erzeugen der Vorspannung kann das Positionsventil beispielsweise ein Federelement aufweisen.

Wenn sich der erste Kolbenschieber in der zweiten Position befindet, ist der elektromagnetische Druckregler dazu eingerichtet, vorzugsweise über einen zweiten Kolbenschieber eine systemdruckführende Leitung des Kraftfahrzeug-Automatikgetriebes mit einer ersten Notfahrgang-Kupplung des Kraftfahrzeug-Automatikgetriebes und mit einer zweiten und ggf. dritten Notfahrgang-Kupplung des Kraftfahrzeug-Automatikgetriebes zu verbinden, wodurch die erste Notfahrgang-Kupplung und die zweite und ggf. dritte Notfahrgang-Kupplung betätigt werden, sodass ein Notfahrgang des Kraftfahrzeug-Automatikgetriebes eingelegt ist.

Das Positionsventil dient insbesondere zur Speicherung einer Vorgeschichte unmittelbar vor einer Aktivierung der hydraulischen Notfahrgangfunktion. Weiterhin dient das Positionsventil als hydraulische Kenngröße, ob ein Vorwärtsfahrgang (z.B. eine Getriebeposition 1 bis 8) eingelegt war und damit ein Notfahrgang zulässig ist.

Insbesondere können die erste Notfahrgang-Kupplung und die zweite sowie ggf. dritte Notfahrgang-Kupplung in eine geöffnete Stellung und in eine geschlossene Stellung gebracht werden. Dabei kann insbesondere vorgesehen sein, dass ein Notfahrgang des Kraftfahrzeug-Automatikgetriebes eingelegt wird, sofern die erste Notfahrgang-Kupplung und die zweite und ggf. dritte Notfahrgang-Kupplung jeweils in ihre geschlossene Stellung gebracht werden. Bevorzugt ist vorgesehen, dass die erste Notfahrgang-Kupplung und die zweite und ggf. dritte Notfahrgang-Kupplung lediglich dann hydraulisch mit Druck beaufschlagt werden, wenn Vorwärtsgänge des Automatikgetriebes eingelegt werden.

Unter einer "fallenden Kennliniencharakteristik" des elektromagnetischen Druckreglers kann im Zusammenhang mit der vorliegenden Erfindung insbesondere verstanden werden, dass ein hydraulischer Ausgabedruck des elektromagnetischen Druckreglers steigt, wenn der elektromagnetische Druckregler aus einem bestromten Zustand in einen unbestromten Zustand gebracht wird. Somit kann der elektromagnetische Druckregler zur Auslösung des Notfahrgangs genutzt werden, wenn eine Stromversorgung des elektromagnetischen Druckreglers nicht zur Verfügung steht, was insbesondere bei einem Ausfall der Getriebesteuerung bzw. der Spannungsversorgung des Automatikgetriebes der Fall sein kann. Der Notfahrgang kann im unbestromten Zustand so lange gehalten werden, bis die Ölversorgung des Automatikgetriebes abgestellt wird und die Ventile dadurch in ihre Ausgangslage zurückverfahren, wodurch der gespeicherten Notfahrgang gelöscht wird.

In einer Ausführungsform umfasst das Ventilsystem weiterhin ein Notlaufventil mit einem zweiten Kolbenschieber, wobei der zweite Kolbenschieber in eine erste Stellung und in eine zweite Stellung gebracht werden kann und wobei der zweite Kolbenschieber in der ersten Stellung vorgespannt ist. Wenn sich der erste Kolbenschieber in der zweiten Position befindet, ist der elektromagnetische Druckregler über das Positionsventil mit dem Notlaufventil hydraulisch verbunden und dazu eingerichtet, in einem unbestromten Zustand den zweiten Kolbenschieber hydraulisch mit Druck zu beaufschlagen, sodass der zweite Kolbenschieber entgegen der Vorspannung in die zweite Stellung gebracht wird, wodurch die systemdruckführende Leitung mit der ersten Notfahrgang-Kupplung und mit der zweiten und ggf. dritten Notfahrgang-Kupplung verbunden wird, wodurch die erste Notfahrgang-Kupplung und die zweite und ggf. dritte Notfahrgang-Kupplung betätigt werden, sodass der Notfahrgang des Kraftfahrzeug-Automatikgetriebes eingelegt ist.

Der Teilebedarf und notwendige Bauraum kann besonders gering gehalten werden, indem auf das Notlaufventil verzichtet wird. Insbesondere können (in anderen Konfigurationen bisher hydraulisch ungenutzte) Stirnflächen von Kupplungsventilschiebern als Betätigungsfläche verwendet werden, um die Kupplungsventilschieber in eine Stellung zu bewegen, in welcher die systemdruckführende Leitung mit der ersten Notfahrgang-Kupplung und mit der zweiten und ggf. dritten Notfahrgang-Kupplung verbunden wird.

In diesem Sinne umfasst das Ventilsystem in einer weiteren Ausführungsform weiterhin einen ersten Kupplungsventilschieber und einen zweiten sowie dritten Kupplungsventilschieber. Gemäß dieser Ausführungsform ist vorgesehen, dass der erste Kupplungsventilschieber und der zweite und dritte Kupplungsventilschieber jeweils in eine erste Stellung und in eine zweite Stellung gebracht werden können, wobei der erste Kupplungsventilschieber und der zweite und dritte Kupplungsventilschieber jeweils in ihrer ersten Stellung vorgespannt sind. Die Vorspannung kann beispielsweise mittels jeweils eines Federelements innerhalb der Net Kupplungsventile hergestellt werden.

Weiterhin kann - wenn sich der erste Kolbenschieber in der zweiten Position befindet - der elektromagnetische Druckregler den ersten Kupplungsventilschieber und den zweiten und dritten Kupplungsventilschieber hydraulisch mit Druck beaufschlagen, so dass der erste Kupplungsventilschieber und der zweite und dritte Kupplungsventilschieber entgegen der Vorspannung jeweils in ihre zweite Stellung gebracht werden, wodurch die systemdruckführende Leitung mit der ersten Notfahrgang-Kupplung und mit der zweiten und dritten Notfahrgang-Kupplung verbunden wird, wodurch die erste Notfahrgang-Kupplung und die zweite und dritte Notfahrgang-Kupplung betätigt werden, sodass der Notfahrgang eingelegt ist.

Um diese Aktivierung des Notvorgangs zu ermöglichen, ist insbesondere vorgesehen, dass Elektromagneten der Kupplungsventile möglichst gut über einen definierten Spalt zu einem Ventilgehäuse der Kupplungsventile hin bzw. mit zusätzlichen Abdichtungsmaßnahmen, z.B. mit einem O-Ring, ausgestattet sind. In einem Normalbetrieb kann vorgesehen sein, dass sich die Kupplungsventilschieber jeweils in ihrer vorgespannten ersten Stellung befinden, in welcher Stirnflächen der Kupplungsventilschieber jeweils über das Positionsventil mit einem drucklosen Tank verbinden und somit entlüften. Wenn sich der erste Kolben in seiner zweiten Stellung befindet und die Stromversorgung des elektromagnetischen Druckreglers ausfällt, so kann der Druckregler seinen maximalen Druck ausgeben, welcher über das Positionsventil auf die Kupplungsventile wirken kann, sodass die systemdruckführende Leitung mit den Notfahrgang-Kupplungen verbunden ist, welche dadurch beispielsweise in ihren geschlossenen Zustand gebracht werden, sodass der Notfahrgang eingelegt wird.

Der erste Kolbenschieber kann beispielsweise mittels eines hydraulischen Drucks aus seiner vorgespannten ersten Stellung in seine zweite Stellung gebracht werden, wobei der hydraulische Druck insbesondere durch ein elektromagnetisches Schaltventil oder durch eine der Notfahrgang-Kupplungen bereitgestellt wird.

In diesem Sinne kann das Ventilsystem ein elektromagnetisches Schaltventil umfassen, welches mit dem Positionsventil hydraulisch verbunden und dazu eingerichtet sein kann, in einem bestromten Zustand den ersten Kolbenschieber hydraulisch mit Druck zu beaufschlagen, sodass der erste Kolbenschieber entgegen der Vorspannung in die zweite Stellung gebracht wird.

Damit die Speicherfunktion des in seine zweite Stellung gebrachten ersten Kolbenschiebers des Positionsventils aufrechterhalten wird, kann das Drucksignal der ersten Notfahrgang-Kupplung oder der zweiten Notfahrgang-Kupplung über ein hydraulisches ODER-Ventil insbesondere einer Stirnfläche des ersten Kolbenschiebers aufgeschaltet werden, sodass der erste Kolbenschieber sozusagen in eine "Selbsthaltung" gebracht wird. Diese Selbsthaltung dient bei einer Aktivierung des hydraulischen Notfahrgangs insbesondere dazu, bei Wegfall des Drucksignals des elektromagnetischen Schaltventils den ersten Kolbenschieber noch für eine gewisse Zeit gegen die Vorspannung der zweiten Stellung zu halten, bis die erste Notfahrgang-Kupplung und die zweite und dritte Notfahrgang-Kupplung geschlossen und damit der Notfahrgang (Vorwärtsgang) eingelegt ist.

Ein Zurückschieben des ersten Kolbenschiebers durch die Vorspannkraft in die vorgespannte Ausgangslage (erste Stellung) aufgrund eines Wegfalls des Drucksignals des elektromagnetischen Schaltventils (insbesondere durch einen Ausfall von dessen Stromversorgung) kann somit zunächst über das Drucksignal der ersten Notfahrgang-Kupplung oder der zweiten Notfahrgang-Kupplung verhindert werden, da die Notfahrgang-Kupplungen wie ein Federspeicherelement wirken und die durch sie ausgeschobene Hydraulikflüssigkeit einen gewissen Restdruck in einer Hydraulikleitung zwischen dem ODER-Ventil und dem Positionsventil aufrecht erhält.

In diesem Sinne umfasst das Ventilsystem ein hydraulisches ODER-Ventil, wobei das ODER-Ventil dazu eingerichtet ist, entweder die erste Notfahrgang-Kupplung oder die zweite Notfahrgang-Kupplung hydraulisch mit dem Positionsventil zu verbinden, sodass der erste Kolbenschieber in der zweiten Stellung gehalten wird, wenn das elektromagnetische Schaltventil sich in einem unbestromten Zustand befindet und den ersten Kolbenschieber nicht hydraulisch mit Druck beaufschlagt.

Die erste Notfahrgang-Kupplung kann an einen ersten eingangsseitigen Anschluss des ODER-Ventils angeschlossen sein, die zweite Notfahrgang-Kupplung kann an einen zweiten eingangsseitigen Anschluss des ODER-Ventils angeschlossen sein und das Positionsventil kann an einen ausgangsseitigen Anschluss des ODER-Ventils angeschlossen sein. Bei dem ODER-Ventil kann es sich um ein Kugelwippenventil handeln. Das ODER-Ventil kann insbesondere dazu eingerichtet sein, eine Druckinformation der ersten Notfahrgang-Kupplung oder der zweiten Notfahrgang-Kupplung an das Positionsventil weiterzuleiten. Wenn beispielsweise lediglich die erste/zweite Notfahrgang-Kupplung hydraulisch mit Druck beaufschlagt ist, dann kann ein hydraulischer Druck, welcher äquivalent oder proportional zu dem Druck ist, mit welchem die erste/zweite Notfahrgang-Kupplung beaufschlagt wird, über das ODER-Ventil an das Positionsventil übertragen werden. Analog verhält es sich, wenn die erste Notfahrgang-Kupplung mit einem höheren Druck beaufschlagt wird als die zweite Notfahrgang-Kupplung und umgekehrt.

Weiterhin kann das ODER-Ventil dazu eingerichtet sein, entweder die erste Notfahrgang-Kupplung oder die zweite Notfahrgang-Kupplung hydraulisch mit dem Positionsventil zu verbinden, sodass der erste Kolbenschieber hydraulisch mit Druck beaufschlagt wird und sich entgegen der Vorspannung in die zweite Stellung bewegt. Mit anderen Worten kann der erste Kolbenschieber durch diese Ausführungsform über das Druckniveau einer der beiden Notfahrgang-Kupplungen in seine zweite Stellung gebracht werden, ohne dass dafür ein separates elektromagnetisches Schaltventil notwendig ist. Diese Ausführungsform ermöglicht eine weitere Optimierung bzw. Verringerung des notwendigen Bauraums, da kein elektromagnetisches Schaltventil notwendig ist. Wenn auf das elektromagnetische Schaltventil verzichtet wird, kann der erste Kolbenschieber des Positionsventils weiterhin kleiner bauen, sodass dadurch ebenfalls Bauraum eingespart werden kann.

Gemäß einer weiteren Ausführungsform ist vorgesehen, dass das Ventilsystem ein Parksperrenventil umfasst, wobei der elektromagnetische Druckregler dazu eingerichtet ist, dass Parksperrenventil zu betätigen, wenn sich der erste Kolbenschieber in der ersten Stellung befindet. Insbesondere kann der elektromagnetische Druckregler über das Positionsventil mit dem Parksperrenventil verbunden sein, wenn sich der erste Kolbenschieber in seiner vorgespannten ersten Stellung befindet, sodass der durch den elektromagnetischen Druckregler generierte hydraulische Druck durch das Positionsventil durchgeschaltet wird und auf das Parksperrenventil einwirkt.

Bei einem Wechsel aus dem Fahrgang im Normalbetriebsmodus in eine Fahrposition "Parken" (P), "Rückwärtsfahrgang" (R) oder "Neutral" (N) werden die erste Notfahrgang-Kupplung und die zweite Notfahrgang-Kupplung gegen einen Vorbefülldruck entlüftet, wodurch eine Druckunterstützung am Positionsventil für die vorstehend beschriebene Selbsthaltung entfällt. Durch dieses Drucklosschalten des Positionsventils kann die Speicherfunktion des Positionsventils rückgängig gemacht werden, wodurch der elektromagnetische Druckregler (wieder) funktional an das Parksperrenventil angebunden wird und für eine Parksperrenventil-Funktion verwendbar ist.

Das Ventilsystem kann weiterhin wenigstens ein Kupplungsventil zur Betätigung einer weiteren Kupplung umfassen (z.B. ein erstes Kupplungsventil zur Betätigung einer ersten Kupplung und ein zweites Kupplungsventil zur Betätigung einer zweiten Kupplung), mittels welcher Nicht-Notfahrgänge des Kraftfahrzeug-Automatikgetriebes eingelegt werden können, wobei das Ventilsystem dazu eingerichtet ist, das wenigstens eine Kupplungsventil mit der systemdruckführenden Leitung zu verbinden, wenn sich der erste Kolbenschieber und der zweite Kolbenschieber jeweils in ihrer ersten Stellung befinden. Beispielsweise kann - in einem regulären Betrieb des Automatikgetriebes, d.h. wenn ein regulärer Gang (nicht der Notfahrgang) eingelegt ist und die Getriebesteuerung bzw. die Spannungsversorgung des Automatikgetriebes gewährleistet ist - das Kupplungsventil über das Notlaufventil mit der systemdruckführenden Leitung verbunden sein, wenn sich der zweite Kolbenschieber des Notlaufventils in der vorgespannten ersten Stellung befindet. Dies ist bevorzugt dann der Fall, wenn sich auch der erste Kolbenschieber des Positionsventils in der zweiten Stellung befindet.

Wenn hingegen der Notfahrgang eingelegt werden soll, weil die Getriebesteuerung bzw. die Spannungsversorgung des Automatikgetriebes ausgefallen ist, so kann der Druckanstieg am elektromagnetischen Druckregler eine stirnseitige Stellkraft an dem zweiten Kolbenschieber des Notlaufventils bewirken, wobei diese Stellkraft den zweiten Kolbenschieber entgegen der Vorspannung in die zweite Stellung verfährt. Dadurch kann eine Systemdruckversorgung zu dem wenigstens einen Kupplungsventil über das Notlaufventil unterbrochen werden, sodass beispielsweise eine Zuleitung zu dem Kupplungsventil gegen einen Tank drucklos geschaltet und entlüftet wird. Damit kann sichergestellt werden, dass die weitere Kupplung geöffnet und kraftschlusslos ist.

In einer alternativen Ausführungsform kann das wenigstens eine Kupplungsventil auch dauerhaft mit der systemdruckführenden Leitung verbunden sein. In diesem Fall erfolgt eine Zuführung des Systemdrucks zu dem wenigstens einen Kupplungsventil nicht über eine Schaltfunktion des Notlaufventils.

Weiterhin kann vorteilhaft vorgesehen sein, dass der elektromagnetische Druckregler dazu eingerichtet ist, in einem Federraum des Positionsventils einen hydraulischen Druck aufzubauen, welcher die Vorspannkraft erhöht, die den ersten Kolbenschieber in der ersten Position hält. Solange der erste Kolbenschieber des Positionsventils in seiner vorgespannten ersten Stellung steht und ein unbeabsichtigtes Schalten des Positionsventils unterbunden werden soll, kann über den elektromagnetischen Druckregler ein Druck im Federraum aufgeschaltet werden, wodurch eine Betätigung des Positionsventils über die Drücke der ersten Notfahrgang-Kupplung oder der zweiten Notfahrgang-Kupplung unterbunden werden kann, sodass der erste Kolbenschieber in seiner vorgespannten Ausgangslage verharrt. Sobald ein Speichern des Notfahrgangs im Fahrbetrieb erwünscht ist, kann dieses Drucksignal drucklos geschaltet und das Positionsventil freigegeben werden.

Weiterhin kann vorteilhaft vorgesehen sein, dass nicht der volle hydraulische Druck des elektromagnetischen Druckreglers zum Sperren des ersten Kolbenschiebers in der ersten Stellung aufgeschaltet ist, sondern dieser Druck über eine Druckteilerschaltung mithilfe beispielsweise einer Blende in eine Tankleitung an einem Anschluss des Positionsventils auf ein niedrigeres Druckniveau abgesenkt werden kann. Vorteilhaft ist dabei eine mögliche vereinfachte Bauart des ersten Kolbenschiebers des Positionsventils, wodurch das Positionsventil im Durchmesser verkleinert werden kann, da insbesondere keine innenliegende Feder verwendet werden muss. In diesem Sinne ist gemäß einer weiteren Ausführungsform vorgesehen, dass der Federraum über eine Blende mit einem drucklosen Tank verbunden ist, sodass der hydraulische Druck innerhalb des Federraums auf ein niedrigeres Druckniveau abgesenkt werden kann.

Bei einer bevorzugten Ausgestaltung der Erfindung ist es möglich, dass der elektromagnetische Druckregler mit einem vierten Anschluss des Positionsventils hydraulisch verbunden ist und dass die elfte Leitung und damit zumindest ein Kupplungsventil einer Notfahrgang-Kupplung mit einem dritten Anschluss des Positionsventils verbunden ist. Zudem ist der dritte Anschluss auch durch eine zweite Druckteilerblende mit einer Tankleitung verbunden. In der zweiten Schaltstellung des Kolbenschiebers ist der dritte Anschluss mit dem vierten Anschluss hydraulisch verbunden, so dass sich bei einer Druckbeaufschlagung der dritten Leitung durch den elektromagnetischen Druckregler eine Strömung vom elektromagnetischen Druckregler zur Tankleitung ausbildet. Hierbei ist durch die Druckverluste an den Druckteilerblenden der Druck in der elften Leitung geringer als zwischen dem elektromagnetischen Druckregler und der ersten Druckteilerblende, so dass auch die Bauteilbelastung der Kupplungsventile geringer ist.

In einer Weiterbildung dieser Ausgestaltung ist zwischen mindestens einem der Kupplungsventile der Notfahrgang-Kupplungen und einem bestimmten Anschluss eines fünften Kupplungsventils eine dritte Druckteilerblende und zwischen diesem bestimmten Anschluss und einer Entlüftung oder einem Tank eine vierte Druckteilerblende angeordnet. Hierdurch ist der Druck in dem bestimmten Anschluss des fünften Kupplungsventils geringer als in mindestens einem der Kupplungsventilen der Notfahrgangventile. Mit der geringeren Druckbelastung sinkt damit vorteilhafterweise die Beanspruchung der Bauteile.

Bevorzugt ist das fünfte Kupplungsventil zur Einstellung des Druckes in einer Trennkupplung (K0) vorgesehen, welche zwischen dem Verbrennungsmotor und dem Getriebe angeordnet ist.

In einem Verfahren zur Diagnose eines beschriebenen Ventilsystems wird ausgehend von der Parksperrenposition der von dem elektromagnetischen Druckregler ausgegebene Druck erhöht und bei einem gemessenen Drehzahlverhältnis ungleich Null am Drehmomentwandler nach einem Verlassen der Parksperrenposition nach einer Erhöhung eines auf das Parksperrenventil auslegend wirkenden Kupplungsdrucks anhand eines Signals eines Parksperrensensors überprüft wird, ob sich der Kolbenschieber in der ersten Schaltstellung befindet.

Alternativ hierzu ist einem weiteren Verfahren zur Diagnose des Ventilsystems vorgesehen, dass ausgehend von einer Fahrstellung abhängig davon ob ein Fahrerwunsch nach einem Einlegen der Parksperrenposition entspricht oder nicht jeweils ein Diagnosepfad verfolgt wird.

Hierbei wird bei einem Wunsch nach der Parksperrenposition in einem ersten Diagnosepfad nach dem Entlüften der Notfahrgang-Kupplungen und eines elektromagnetischen Schaltventils, sowie einer Erhöhung des von dem elektromagnetischen Druckregler ausgegebenen Drucks anhand des Signals eines Parksperrensensors überprüft wird, ob sich der Kolbenschieber in der ersten Schaltstellung befindet. Wenn ein anderer Fahrerwunsch als die Parksperrenposition vorliegt, wird in einem zweiten Diagnosepfad nach dem Einlegen einer bestimmten Fahrposition nach einer Erhöhung des Druckes mindestens einer Notfahrgang-Kupplung über einen Schaltdruck des Positionsventils eine bestimmte Wartezeit abgewartet. Nach der Wartezeit wird der von dem elektromagnetischen Druckregler ausgegebene Druck erhöht und die Notfahrgang-Kupplung entlüftet. Danach wird anhand der Überprüfung der eingestellten Getriebeübersetzung festgestellt, ob der Notfahrgang eingelegt ist und sich der Kolbenschieber in der richtigen Schaltstellung befindet.

In einem Verfahren zur Diagnose mindestens eines anderen oben beschriebenen Ventilsystems wird ausgehend von der Parksperrenposition der von dem elektromagnetischen Druckregler ausgegebene Druck erhöht wird und bei einem gemessenen Drehzahlverhältnis ungleich Null am Drehmomentwandler nach einem Einlegen einer bestimmten Fahrstufe der von dem elektromagnetischen Druckregler (86) ausgegebene Druck erhöht und die Notfahrgang-Kupplungen entlüftet. Danach wird anhand von Drehzahlsignalen überprüft, ob die bestimmte Fahrstufe als Notfahr-Gangstufe eingelegt ist, wobei anhand einer positiven Überprüfung festgestellt wird, ob sich der Kolbenschieber des Positionsventils richtigerweise in der zweiten Schaltstellung befindet.

Gemäß einem zweiten Aspekt der Erfindung wird ein Automatikgetriebe für ein Kraftfahrzeug bereitgestellt. Das Automatikgetriebe umfasst ein Ventilsystem gemäß dem ersten Aspekt der Erfindung.

Gemäß einem dritten Aspekt der Erfindung wird ein Kraftfahrzeug bereitgestellt, welches ein Automatikgetriebe gemäß dem zweiten Aspekt der Erfindung umfasst.

Im Folgenden werden Ausführungsbeispiele der Erfindung anhand der schematischen Zeichnung näher erläutert, wobei gleiche oder ähnliche Elemente mit dem gleichen Bezugszeichen versehen sind.

Hierbei zeigt
- Fig. 1: einen Hydraulikschaltplan eines ersten Ausführungsbeispiels eines Ventilsystems für eine hydraulische Notfahrgangfunktion eines Kraftfahrzeug-Automatikgetriebes,
- Fig. 2: eine Ganglogiktabelle eines Kraftfahrzeug-Automatikgetriebes,
- Fig. 3: einen Hydraulikschaltplan eines zweiten Ausführungsbeispiels eines Ventilsystems für eine hydraulische Notfahrgangfunktion eines Kraftfahrzeug-Automatikgetriebes,
- Fig. 4: einen Hydraulikschaltplan eines dritten Ausführungsbeispiels eines Ventilsystems für eine hydraulische Notfahrgangfunktion eines Kraftfahrzeug-Automatikgetriebes und
- Fig. 5: einen Hydraulikschaltplan eines vierten Ausführungsbeispiels eines Ventilsystems für eine hydraulische Notfahrgangfunktion eines Kraftfahrzeug-Automatikgetriebes,
- Fig. 6: einen Hydraulikschaltplan eines fünften Ausführungsbeispiels eines Ventilsystems für eine hydraulische Notfahrgangfunktion eines Kraftfahrzeug-Automatikgetriebes,
- Fig. 7: einen Hydraulikschaltplan eines sechsten Ausführungsbeispiels eines Ventilsystems für eine hydraulische Notfahrgangfunktion eines Kraftfahrzeug-Automatikgetriebes, und
- Fig. 8: ein Ablaufdiagramm eines Diagnoseverfahrens für ein nach dem ersten Ausführungsbeispiel gestalteten Ventilsystem,
- Fig. 9: ein Ablaufdiagramm eines weiteren Diagnoseverfahrens für ein nach dem ersten Ausführungsbeispiel gestalteten Ventilsystem, und
- Fig. 10: ein Ablaufdiagramm eines Diagnoseverfahrens für nach weiteren Ausführungsbeispielen gestaltete Ventilsysteme.

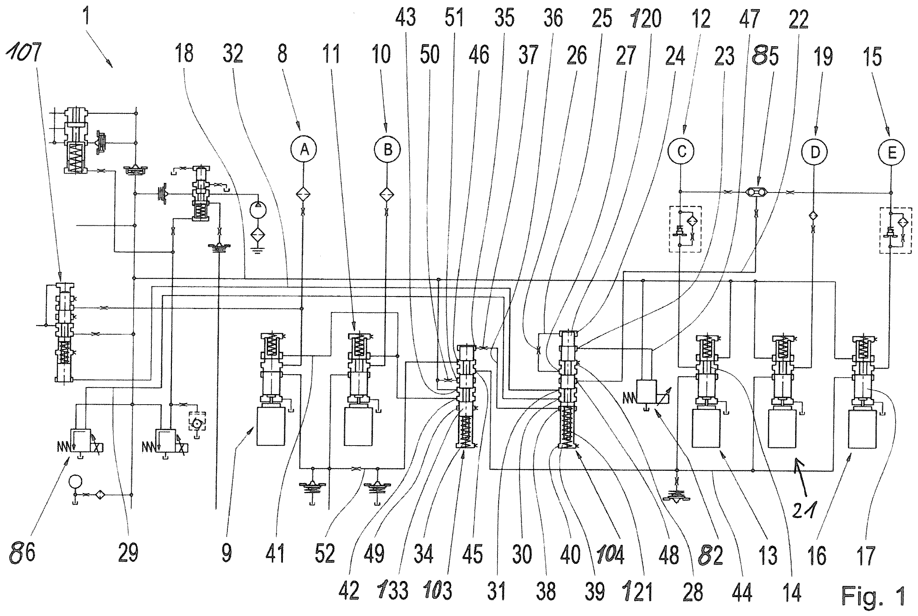

Fig. 1 zeigt ein Ventilsystem 1 für eine hydraulische Notfahrgangfunktion eines Automatikgetriebes für ein Kraftfahrzeug. Das Ventilsystem 1 umfasst ein elektromagnetisches Schaltventil 82, ein Notlaufventil 103, ein Positionsventil 104, ein hydraulisches ODER-Ventil 85 in Form eines Kugelwippenventils, einen elektromagnetischen Druckregler 86 mit fallender Kennliniencharakteristik sowie ein Parksperrenventil 7. Weiterhin umfasst das Ventilsystem 1 eine erste Kupplung 8, die über ein erstes Kupplungsventil 9 betätigt werden kann, und eine zweite Kupplung 10, die über ein zweites Kupplungsventil 11 betätigt werden kann. Außerdem umfasst das Ventilsystem 1 eine erste Notfahrgang-Kupplung 12, die über ein drittes Kupplungsventil 13 mit einem ersten Kupplungsventilschieber 14 betätigt werden kann, und eine zweite Notfahrgang-Kupplung 15, die über ein viertes Kupplungsventil 16 mit einem zweiten Kupplungsventilschieber 17 betätigt werden kann, sowie eine systemdruckführende Leitung 18. Weiterhin weist das Ventilsystem noch eine nicht näher beschriebene dritte Notfahrgang-Kupplung 19 auf, welche durch ein fünftes Kupplungsventil 21 betätigt wird.

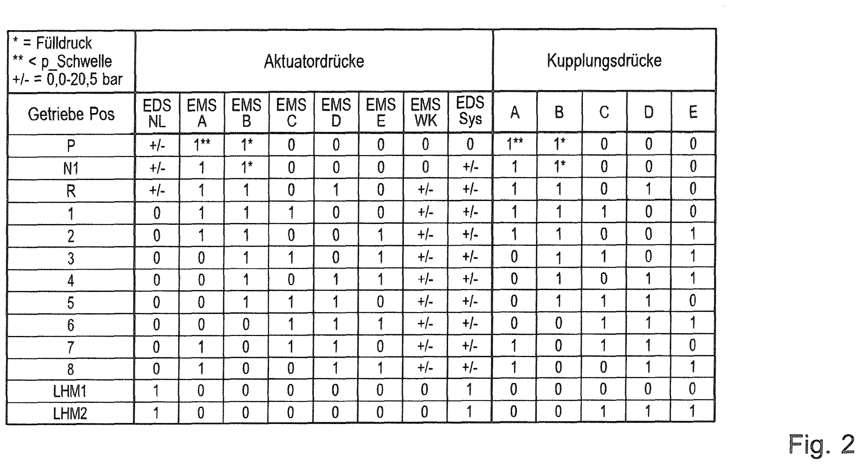

Das hydraulische ODER-Ventil 85 ist dazu eingerichtet, eine Druckinformation der ersten Notfahrgang-Kupplung 12 oder der zweiten Notfahrgang-Kupplung 15 an das Positionsventil 104 weiterzuleiten. Die Notfahrgang-Kupplungen 12 und 15 sind der Schaltlogik nach Fig. 2 (Spalten "C" und "E") entsprechend nur in den Vorwärtsgängen 1 bis 8 bedruckt und werden als hydraulische Ganginformation zur Unterscheidung der Position "Drive" (D) zu "Parken" (P), Rückwärts" (R) bzw. "Neutral" (N) verwendet. Das Positionsventil 104 dient zur Speicherung der Vorgeschichte unmittelbar vor Aktivierung einer hydraulischen Notlauffunktion und dient weiterhin als hydraulische Kenngröße, ob eine Getriebepositionen 1 bis 8 eingelegt war und damit ein Notfahrgang (D6) zulässig ist.

Das Positionsventil 104 umfasst einen ersten Kolbenschieber 120, welcher durch ein erstes Federelement 121 innerhalb des Positionsventils 104 in einer ersten Stellung (Endanschlag) vorgespannt ist, die durch Fig. 1 gezeigt ist. Entgegen der Vorspannung kann der erste Kolbenschieber 120 in axialer Richtung des Positionsventils 104 in eine zweite Stellung gebracht werden. In der ersten Stellung des ersten Kolbenschiebers 120, in welcher sich eine Stirnseite des ersten Kolbenschiebers 120 in einem Anschlag einer äußeren Ventiltasche an einem neunten Anschluss 24 des Positionsventils 104 befindet, können bei einer Aktivierung des hydraulischen Notfahrgangs, d.h. bei einer Abschaltung der Spannungsversorgung aller Aktuatoren, sämtliche Getriebekupplungen geöffnet und auf ein Vorbefülldruckniveau geschaltet werden. Die erste Stellung des ersten Kolbenschiebers 120 entspricht damit einer Notfahrgangreaktion "offenes Getriebe" aus einem Fahrbetrieb der Positionen P/R/N heraus.

Damit der erste Kolbenschieber 120 des Positionsventils 104 in dieser ersten Stellung steht, wird das Positionsventil 104 drucklos geschaltet. Damit ist die Verbindung des ODER-Ventils 85 über eine erste Leitung 22 zu dem neunten Anschluss 24 des Positionsventils 104 über den ersten Kolbenschieber 120 abgedichtet.

Eine stirnseitige Druckfläche des ersten Kolbenschiebers 120 wird in dem neunten Anschluss 24 des Positionsventils 104 über eine zweite Leitung 25 und über eine optionale erste Blende 26 über einen sechsten Anschluss 27 zu einem siebten Anschluss 28 des Positionsventils 104 in Richtung eines Tanks entlüftet und ist damit drucklos. Der elektromagnetische Druckregler 86 weist eine fallende Kennliniencharakteristik auf, d.h. in einem stromlosen Zustand gibt dieser einen hohen Druck aus. Dieser Druck kann über eine dritte Leitung 29 zu einem dritten Anschluss 30 des Positionsventils 104 zu einem vierten Anschluss 31 des Positionsventils 104 durchgeschaltet werden und über eine vierte Leitung 32 auf das Parksperrenventil 7 einwirken.

Das Notlaufventil 103 umfasst einen zweiten Kolbenschieber 133, welcher durch ein zweites Federelement 34 innerhalb des Notlaufventils 103 in einer ersten Stellung (Endanschlag) vorgespannt ist, die durch Fig. 1 gezeigt ist. Eine stirnseitige Betätigungsfläche des zweiten Kolbenschiebers 133 ist über eine an einem ersten Anschluss 35 des Notlaufventils 103 angebundene fünfte Leitung 36, welche mit einer optionalen zweiten Blende 37 versehen ist, mit einem zweiten Anschluss 38 des Positionsventils 104 verbunden. Der zweite Anschluss 38 ist über einen Federraum 39 des Positionsventils 104 mit einem ersten Anschluss 40 des Positionsventils 104 verbunden und gegen einen Tank entlüftet und damit drucklos, sodass der zweite Kolbenschieber 133 des Notlaufventils 103 in seiner ersten Stellung verbleibt.

Das erste Kupplungsventil 9 und das zweite Kupplungsventil 11 sind in der durch Fig. 1 gezeigten ersten Stellung des zweiten Kolbenschiebers 133 über eine sechste Leitung 41 mit einem sechsten Anschluss 42 des Notlaufventils 103 verbunden. Der sechste Anschluss 42 ist über einen fünften Anschluss 43 des Notlaufventils 103 mit der systemdruckführenden Leitung 18 verbunden und druckversorgt. Eine Vorbefüllleitung 44 ist einerseits mit einem dritten Anschluss 45 des Notlaufventils 103 und andererseits mit jeweils einem Anschluss des dritten Kupplungsventils 13, des vierten Kupplungsventils 16 und des fünften Kupplungsventils 21 verbunden. Die Vorbefüllleitung 44 wird auf einem Vorbefülldruckniveau gehalten und der dritte Anschluss 45 des Notlaufventils 103 mit einem zweiten Anschluss 46 des Notlaufventils 103 verbunden.

Das elektromagnetische Schaltventil 82 ist über eine siebte Leitung 47 an den achten Anschluss 23 des Positionsventils 104 angeschlossen. Erfolgt nun ein Positionswechsel in einen der Vorwärtsgänge 1 bis 8, dann wird zur Speicherung der erste Kolbenschieber 120 des Positionsventils 104 mittels des innerhalb der siebten Leitung 47 vorherrschenden hydraulischen Druckes, der durch das elektromagnetische Schaltventil 82 generiert wird, in den federseitigen Anschlag verschoben. Damit die Speicherfunktion des verschobenen ersten Kolbenschiebers 120 nicht verloren geht, wird das Drucksignal der ersten Notfahrgang-Kupplung 12 oder der zweiten Notfahrgang-Kupplung 15 über das ODER-Ventil 85 und die erste Leitung 22 an einem fünften Anschluss 48 des Positionsventils 104 über die sechste Tasche 27 des Positionsventils 104 auf eine Stirnfläche der neunten Tasche 24 aufgeschaltet, wodurch der erste Kolbenschieber 120 des Positionsventils 104 in die sogenannte "Selbsthaltung" gebracht wird.

Diese Selbsthaltung dient bei einer Aktivierung des hydraulischen Notfahrgangs dazu, bei Wegfall des Drucksignals des elektromagnetischen Schaltventils 82 den ersten Kolbenschieber 120 des Positionsventils 104 noch für eine gewisse Zeit gegen das Federelement 121 verschoben zu halten, bis die Notfahrgang-Kupplungen 12, 15 und 19 geschlossen sind und damit der Notfahrgang (Vorwärtsgang) eingelegt ist.

Das Drucksignal des elektromagnetischen Druckreglers 86 wird nun von der dritten Tasche 30 des Positionsventils 104 auf dessen zweiten Anschluss 38 umgeleitet, welcher über die fünfte Leitung 36 mit der stirnseitigen Druckfläche des zweiten Kolbenschiebers 133 des Notlaufventils 103 verbunden ist. Im Normalbetrieb muss das Drucksignal drucklos gegen den Tank entlüftet sein, und der zweite Kolbenschieber 133 des Notlaufventils 103 muss in der ersten Stellung verharren.

Bei einem Wechsel der Fahrposition in eine der Positionen P/R/N werden die erste Notfahrgang-Kupplung 12 und die zweite Notfahrgang-Kupplung 15 gegen Vorbefülldruck entlüftet und die Druckunterstützung am Positionsventil 104 für die Selbsthaltungsfunktion entfällt. Damit kann durch Drucklosschalten des Positionsventils 104 die Speicherfunktion des Positionsventils 104 rückgängig gemacht werden, wodurch auch der elektromagnetische Druckregler 86 funktional wieder an das Parksperrenventil 7 angebunden wird und für die Parksperren-Funktion verwendbar ist. Damit ist der hydraulische Notfahrgang wieder gelöscht und das Automatikgetriebe würde in den offenen Zustand fallen.

Bei gespeichertem Notfahrgang, d.h. wenn der erste Kolbenschieber 120 wie vorstehend beschrieben entgegen der Federkraft in die zweite Stellung verschoben ist, wird der Notfahrgang bei einem Wegfall der Spannungsversorgung der Aktuatoren wie im Folgenden beschrieben ausgelöst. Durch Abschalten der Spannungsversorgung der Aktuatoren werden diese drucklos geschaltet. Eine Ausnahme bildet hierbei der elektromagnetische Druckregler 86, welcher aufgrund seiner fallenden Kennliniencharakteristik einen hohen Druck ausgibt, welcher in der dritten Leitung 29 vorherrscht. Das Zurückschieben des ersten Kolbenschiebers 120 in seine vorgespannte erste Stellung aufgrund des Wegfalls des Drucksignals des elektromagnetischen Schaltventils 82 wird zunächst über das Kupplungsdrucksignal der ersten Notfahrgang-Kupplung 12 oder der zweiten Notfahrgang-Kupplung 15 verhindert. Die Notfahrgang-Kupplungen 12 und 15 wirken wie ein Federspeicherelement und das ausschiebende Öl hält einen gewissen Restdruck innerhalb der ersten Leitung 22 aufrecht.

Der gestiegene Druck innerhalb der dritten Leitung 29 bewirkt über die fünfte Leitung 36 und den ersten Anschluss 35 am Notlaufventil 103 nun eine stirnseitige Stellkraft, welche den zweiten Kolbenschieber 133 des Notlaufventils 103 entgegen der Federkraft in den federseitigen Anschlag verfährt. Hierdurch wird die Systemdruckversorgung zu den Kupplungsventilen 9 und 11 über den fünften Anschluss 43 und den sechsten Anschluss 42 des Notlaufventils 103 unterbrochen. Die sechste Leitung 41 wird über einen siebten Anschluss 49 des Notlaufventils 103 gegen den Tank drucklos geschaltet und entlüftet. Damit ist sichergestellt, dass die erste Kupplung 8 und die zweite Kupplung 10 geöffnet und kraftschlusslos sind.

Die systemdruckführende Leitung 18 ist über eine optionale dritte Blende 50 mit einem vierten Anschluss 51 des Notlaufventils 103 verbunden und zu dessen dritten Anschluss 43 mit der Vorbefüllleitung 44 hin kontaktiert. Gleichzeitig wird eine weitere Vorbefüllleitung 52 der ersten Kupplung 8 und der zweiten Kupplung 10 an dem zweiten Anschluss 46 des Notlaufventils 103 in Richtung des dritten Anschlusses 45 abgekoppelt. Damit werden die Notfahrgang-Kupplungen 12, 15 und 19 über die Vorbefüllleitung 44 mit Systemdruck versorgt und geschlossen, womit der Notfahrgang eingelegt ist. Der Notfahrgang wird im stromlosen Zustand so lange gehalten, bis die Ölversorgung des Getriebesystems abgestellt wird und die Ventile dadurch in ihre Ausgangslage zurückverfahren, wodurch der gespeicherte Notfahrgang gelöscht wird.

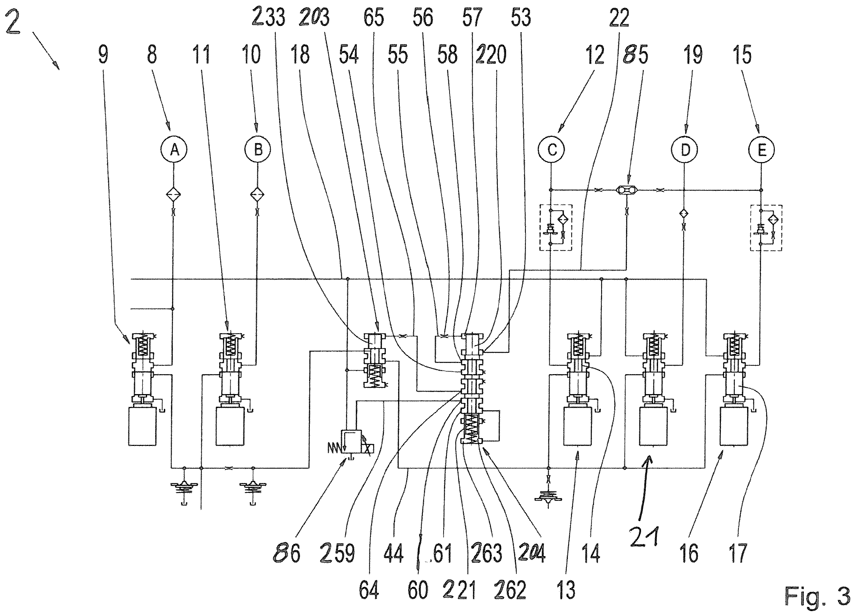

Das Ventilsystem 2 nach Fig. 3 unterscheidet sich von dem Ventilsystem 1 nach Fig. 1 insbesondere dadurch, dass die Systemdruckzuführung zu den Kupplungsventilen 9 und 11 nicht durch die Schaltfunktion eines Notlaufventils 203 und über die sechste Leitung 41 (vgl. Fig. 1) erfolgt, die in dem Ausführungsbeispiel nach Fig. 3 nicht vorhanden ist. Stattdessen sind die Kupplungsventile 9 und 11 gemäß dem Ausführungsbeispiel nach Fig. 3 dauerhaft und direkt mit der systemdruckführenden Leitung 18 verbunden.

Ein Positionsventil 204 ist in dem Ausführungsbeispiel nach Fig. 3 durch ein bauraumoptimiertes Ventil ersetzt. Ein erster Kolbenschieber 220 des Positionsventils 204 wird nicht über ein separates elektromagnetisches Schaltventil in die zweite Stellung gebracht. Dieses elektromagnetische Schaltventil entfällt gemäß dem Ausführungsbeispiel nach Fig. 3. Stattdessen wird der erste Kolbenschieber 220 des Positionsventils 204 in dem Ausführungsbeispiel nach Fig. 3 über das Druckniveau einer der beiden Notfahrgang-Kupplungen 12 oder 15 in die zweite Stellung gebracht.

Der Kupplungsdruck des ODER-Ventils 85 wirkt an einem neunten Anschluss 53 des Positionsventils 204 auf eine Differenzfläche des Kolbenschiebers 220, wobei diese Differenzfläche über zwei unterschiedliche Durchmesser zweier Kolbenbünde des ersten Kolbenschiebers 220 ausgebildet wird. Da der Druck an einer relativ kleinen Fläche angreift, wird ein sehr hoher Kupplungsdruck zum Verschieben des ersten Kolbenschiebers 220 des Positionsventils 204 entgegen der Federkraft benötigt. Dieser Kupplungsdruck wird so hoch eingestellt, dass ein versehentliches Betätigen des Ventils 204 unterbunden werden kann. Wenn der Kupplungsdruck ausreichend hoch ist, verschiebt sich der erste Kolbenschieber 220 des Positionsventils 204 entgegen der Federkraft und verschließt einen Entlüftungsanschluss 54, welcher zuvor eine achte Leitung 55 mit einer optionalen vierten Blende 56 zu einer Stirnfläche an einem zehnten Anschluss 57 des Positionsventils 204 über eine Verbindung zu einer achten Steuertasche 58 drucklos gegen den Tank entlüftet hat.

Der achte Anschluss 58 wird währenddessen mit dem Drucksignal führenden neunten Anschluss 53 der Notfahrgang-Kupplungen 12 und 15 beaufschlagt, sodass der Kupplungsdruck nun auch stirnseitig auf der großen Steuerfläche des ersten Kolbenschiebers 220 wirken kann und das Positionsventil 204 bzw. dessen ersten Kolbenschieber 220 in Selbsthaltung schaltet. Der Selbsthaltedruck beträgt aufgrund des Flächenzuwachses nur noch einen Bruchteil des Schaltdrucks. Der elektromagnetische Druckregler 86 mit fallender Kennliniencharakteristik wird nun lediglich noch zur Ansteuerung des Notlaufventils 203 und des Positionsventils 204 verwendet. Im Gegensatz zu dem Ausführungsbeispiel nach Fig. 1 besteht gemäß dem Ausführungsbeispiel nach Fig. 3 keine Verbindung zwischen dem elektromagnetischen Druckregler 86 und dem Parksperrenventil.

Solange der erste Kolbenschieber 220 des Positionsventils 204 in seiner ersten Stellung steht und ein unbeabsichtigtes Schalten des Positionsventils 204 unterbunden werden soll, kann über den elektromagnetischen Druckregler 86 über eine neunte Leitung 259 zu einem vierten Anschluss 60 des Positionsventils 204 über dessen dritten Anschluss 61 ein Druck in einem Federraum 262 eines ersten Anschlusses 263 aufgeschaltet werden, wodurch der erste Kolbenschieber 220 des Positionsventils 204 nicht mehr über die Kupplungsdrücke der Notfahrgang-Kupplungen 12 und 15 betätigbar ist und in seiner ersten Stellung verharrt. Sobald ein Speichern des Notfahrgangs im Fahrbetrieb erwünscht ist, wird das durch den elektromagnetischen Druckregler 86 generierte Drucksignal drucklos geschaltet und auf diese Weise der erste Kolbenschieber 220 des Positionsventils 204 freigegeben.

Erfolgt ein Druckaufbau durch den elektromagnetischen Druckregler 86 in der neunten Leitung 259 bei entgegen der Federkraft verschobenem ersten Kolbenschieber 220, wie es z.B. bei einer Aktivierung des hydraulischen Notfahrgangs der Fall ist, so wird der durch den Druckregler 86 innerhalb der neunten Leitung 259 generierte Druck am vierten Anschluss 60 des Positionsventils 204 über dessen fünften Anschluss 64 über eine zehnte Leitung 65 auf die Stirnflächen des zweiten Kolbenschiebers 233 des Notlaufventils 203 aufgeschaltet. Dadurch schaltet das Notlaufventil 203 die Systemdruckversorgung (systemdruckführende Leitung 18) auf die Vorbefüllleitung 44 und schließt damit die Notfahrgang-Kupplungen 12, 15 und 19, was der Einlegung des Notfahrgangs entspricht.

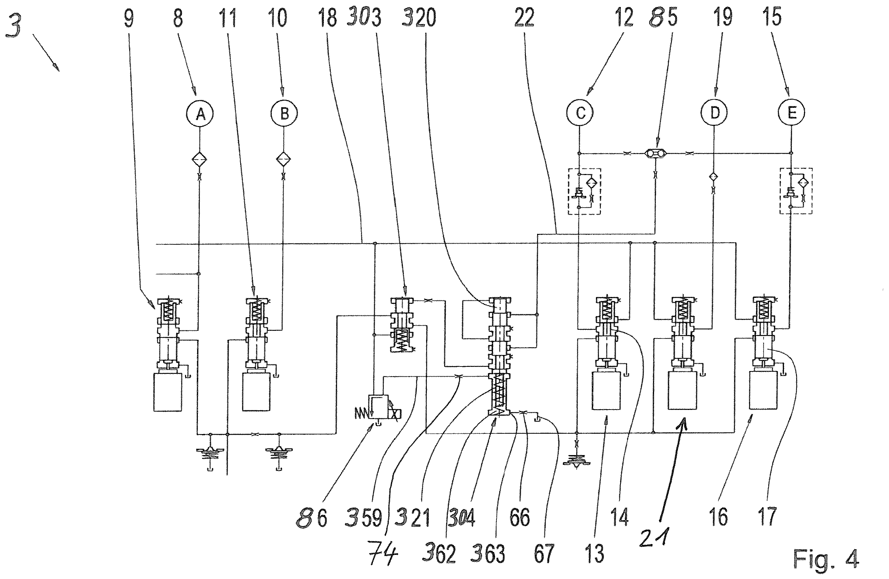

Das Ventilsystem 3 nach Fig. 4 stellt eine Modifikation des Ventilsystems 1 nach Fig. 3 dar. In dem Ausführungsbeispiel nach Fig. 4 ist insbesondere eine weitere Ausgestaltung eines Positionsventils 304 gezeigt, wobei nicht der volle durch den Druckregler 86 innerhalb der neunten Leitung 359 und innerhalb des Federraums 362 generierte Druck zum Sperren eines ersten Kolbenschiebers 320 des Positionsventils 304 in Ausgangslage (erste Stellung) aufgeschaltet ist. Stattdessen kann dieser Druck über eine Druckteilerschaltung mithilfe einer fünften Blende 66 in einer Tankleitung 67 an dem ersten Anschluss 363 des Positionsventils 304, d.h. in Durchströmungsrichtung nach dem Federraum 362, sowie einer optionalen sechsten Blende 369 in der neunten Leitung 359 im Zulauf zum Federraum 362 auf ein niedrigeres Druckniveau abgesenkt werden. Dadurch kann die Bauart des ersten Kolbenschiebers 320 des Positionsventils 304 vereinfacht werden, wodurch das Positionsventil 304 im Durchmesser verkleinert werden kann, da keine innenliegende Feder verwendet werden muss.

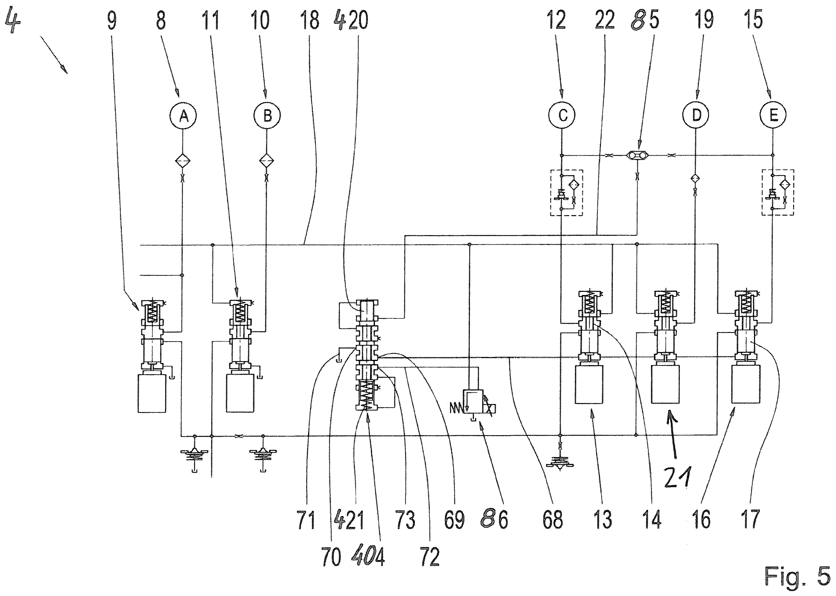

In der Ausführungsform des Ventilsystems 4 nach Fig. 5 ist der Teilebedarf und der Bauraum nochmals reduziert, da kein Notlaufventil vorgesehen ist. Die Betätigung eines ersten Kolbenschiebers 420 eines Positionsventils 404 erfolgt analog dem Ausführungsbeispiel nach Fig. 3 über die Kupplungsdrücke der Notfahrgang-Kupplungen 12 und 15. Ebenso kann der erste Kolbenschieber 420 in seiner Ausgangslage (erste Stellung) durch eine Druckbeaufschlagung mittels des elektromagnetischen Druckreglers 86 mit fallender Kennliniencharakteristik in seiner Ausgangslage blockiert werden.

Das Ventilsystem 4 ermöglicht, dass die bisher hydraulisch ungenutzten Stirnflächen insbesondere des ersten Kupplungsventilschiebers 14 und des zweiten Kupplungsventilschiebers 17 als Betätigungsfläche zur Aktivierung des hydraulischen Notfahrgangs verwendet werden können. Um dies zu ermöglichen, sind Elektromagneten insbesondere des dritten Kupplungsventils 13 und des vierten Kupplungsventils 16 möglichst gut über einen definierten Spalt zu einem Gehäuse des jeweiligen Kupplungsventils 13 bzw.16 hin oder mit zusätzlichen Abdichtungsmaßnahmen, z.B. mit einem O-Ring, ausgestattet.

In einem Normalbetrieb werden die Stirnflächen dieser Kupplungsventilschieber 14 und 17 über eine elfte Leitung 68 über das Positionsventil 404 an dessen fünften Anschluss 69 zu dessen sechsten Anschluss 70 mit einer Tankleitung 71 verbunden und entlüftet. Wenn bei dem in seine zweite Stellung verschobenem ersten Kolbenschieber 420 des Positionsventils 404 der hydraulische Notfahrgang aktiviert wird, so gibt der elektromagnetische Druckregler 86 seinen maximalen Druck aus, welcher über eine zwölfte Leitung 72 an einem vierten Anschluss 73 des Positionsventils 4 auf dessen fünften Anschluss 69 geschaltet wird. Damit werden die Kupplungsventile 13 und 16 angesteuert, wodurch die Notfahrgang-Kupplungen 12 und 15 geschlossen und der Notfahrgang eingelegt wird. Die vorstehenden Ausführungen gelten analog auch für die Notfahrgang-Kupplung 19.

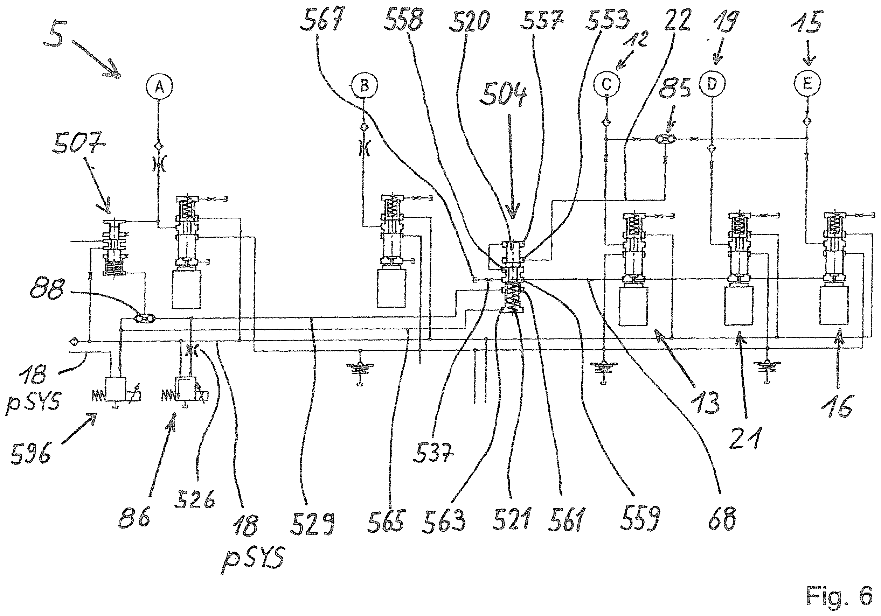

Fig. 6 zeigt in einem Ausschnitt aus einem Hydraulikplan ein Ventilsystem 5. Dieses umfasst ein Positionsventil 504, einen elektromagnetischen Druckregler 86 sowie ein Parksperren-Magnetventil 596 und kann wie das Ventilsystem 4 auf ein Notlaufventil verzichten. Das Positionsventil 504 umfasst einen Kolbenschieber 520, welcher im Normalbetrieb von einem Federelement 521 in eine erste Schaltstellung gedrückt wird. Das Positionsventil 504 weist sechs Anschlüsse 557, 553, 558, 559, 561 und 563 auf. Der Anschluss 557 ist durch eine Leitung mit dem Anschluss 558 verbunden. Der Anschluss 553, welcher axial zwischen den Anschlüssen 557 und 558 ausgebildet ist, ist durch die Leitung 22 mit dem ODER-Ventil 85 verbunden, wodurch der Kolbenschieber 520 von dem Druck der Notfahrgang-Kupplung 12 oder 15 beaufschlagbar ist. Der Anschluss 559 ist durch eine zweite Blende 537 mit einer Tankleitung 567 verbunden und damit entlüftet, d.h. mit einem drucklosen Bereich bzw. dem Ölsumpf verbunden. Die elfte Leitung 68, welche die Kupplungsventile 13 und 16 sowie das Kupplungsventil 21 der dritten Notfahrgang-Kupplung 19 verbindet, ist in der ersten Schaltstellung des Kolbenschiebers 520 ebenfalls durch den Anschluss 559 entlüftet, analog zum Normalbetrieb des Ventilsystems 4 in Fig. 5.

Die Betätigung eines ersten Kolbenschiebers 520 des Positionsventils 504 erfolgt analog den Ausführungsbeispielen nach Fig. 3 und 4 über die Kupplungsdrücke der Notfahrgang-Kupplungen 12 und 15 aus dem hydraulischen ODER-Ventil 85. Ist die Wählhebelstellung P eingelegt, so ist das Parksperren-Magnetventil 596 bestromt und es wirkt der Druck des Parksperren-Magnetventils 596 sowohl auf ein Parksperrenventil 507 als auch durch eine Leitung 565 und den Anschluss 563 auf die Seite des Kolbenschiebers 520, auf welche die Kraft der Feder 521 wirkt. Damit nimmt der Kolbenschieber 520 die in Fig. 6 dargestellte erste Schaltstellung ein.

Ist die Fahrstufe D gewählt und damit entweder die erste Notfahrgang-Kupplung 12 oder die zweite Notfahrgang-Kupplung 15 geschlossen und damit druckbeaufschlagt, so wirkt der Kupplungsdruck pC oder pE durch das ODER-Ventil 85 und die Leitung 22 auf den Kolbenschieber 520. Die Kraft der Feder 521 und die Flächen des Kolbenschiebers 520 sind so gewählt, dass der Druck pC der Notfahrgang-Kupplung 12 oder ein Druck pE der Notfahrgang-Kupplung 15, welcher im Anschluss 553 auf den Kolbenschieber 520 entgegen der Kraft der Feder 521 wirkt, ausreicht um den Kolbenschieber 520 entgegen der Kraft der Feder 521 in eine zweite Anschlagstellung zu verschieben. Durch eine Leitung zwischen einem Anschluss 558 und 553 wirkt der Kupplungsdruck pC oder pE auch auf die Stirnfläche des Kolbenschiebers 520, so dass dieser im Zustand der Selbsthaltung ist. Fällt nun der Strom in der Getriebesteuerung aus, so wird der Anschluss 563 durch die Leitung 565 und durch ein Parksperren-Magnetventil 596 entlüftet, so dass der Druck im Bereich der Feder 521 auf einen Umgebungsdruck p0 absinkt.

Durch den Stromausfall nimmt gleichzeitig mit dem Entlüften des Parksperren-Magnetventils 596, und damit der Leitung 565, der von dem elektromagnetische Druckregler 86 ausgegebene Druck zu, da der elektronische Druckregler 86 eine fallende Druck-Strom-Kennlinie aufweist und bei geringem Strom einen hohen Druck ausgibt. Der Druck in der Leitung 529 wird größer und druckbeaufschlagt durch den Anschluss 561 auch die elfte Leitung 68 und wirkt damit auf die Kupplungsventilschieber 14 und 17 der Kupplungsventile 13 und 16 sowie auf das Kupplungsventil 21 der dritten Notfahrgang-Kupplung 19. Hierdurch werden alle drei Notfahrgang-Kupplungen 12, 15 und 19 druckbeaufschlagt und damit geschlossen, so dass der 6. Gang eingelegt ist.

Eine vorhandene Trennkupplung K0 ist hierbei im stromlosen Zustand des Automatikgetriebes offen, so dass nur elektrisch gefahren werden kann.

In der zweiten Schaltstellung des Kolbenschiebers 520 bilden die Blenden 526 und 537 einen Druckteiler, so dass der Druck in der elften Leitung 68 im Vergleich zum Ventilsystem 4 in Fig. 5 geringer ist und damit auch die Bauteilbelastung der Kupplungsventile der Notfahrgang-Kupplungen 12, 15 und 19.

Wenn kein Notfahrgang aktiv ist, ist die Druckbelastung auf die elfte Leitung 68 von den Kupplungsventilen 13, 16 und 21 reduziert.

Das Parksperren-Magnetventil 596 und der elektromagnetische Druckregler 86 sind bezüglich der Ansteuerung des Parksperrenventils 507 redundant, da der Druck des elektromagnetischen Druckreglers 86 durch ein ODER-Ventil 88 auf das Parksperrenventil 507 wirkt, so dass bei einem Ausfall des Parksperren-Magnetventils 596 ein Ersatzsignal anliegt. Zur Absicherung der Parksperrenventilstellung in der in Fig. 6 dargestellten Endlage (Position P) kann dieses gegen unbeabsichtigtes Betätigen nach Position "nicht_P" über den Druck des elektromagnetischen Druckreglers 86 abgesichert werden. Falls dieser Druck aufgrund eines Fehlers nicht anliegen sollte, wirkt der Druck des Parksperren-Magnetventils 596 redundant über das ODER-Ventil 88 auf den Federraum des Parksperrenventils 507 und übernimmt die Absicherungsfunktion.

Im Notfahrgang kann nur elektrisch gefahren werden, weil eine nicht dargestellte Trennkupplung K0 geöffnet und somit verbrennungsmotorischer Antrieb nicht möglich ist.

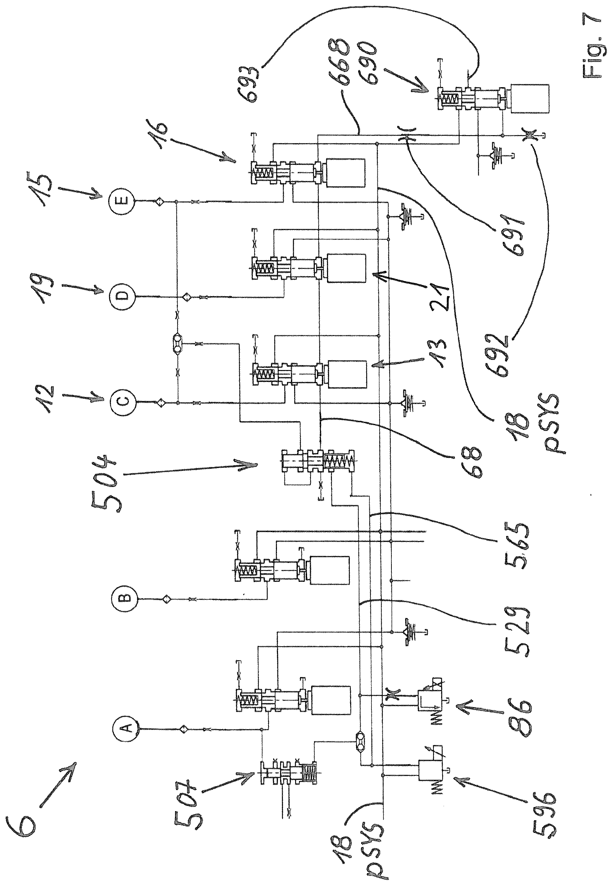

Fig. 7 zeigt in einem Ausschnitt aus einem Hydraulikplan ein Ventilsystem 6, welches sich vom Aufbau des Ventilsystems 5 aus Fig. 6 dadurch unterscheidet, dass die Leitung 68 durch die Kupplungsventile der Notfahrgang-Kupplungen 12, 15 und 19 durch eine Leitung 668 bis in ein Kupplungsventil 690 der Trennkupplung K0 verlängert wird. Durch einen Anschluss 693 ist das Kupplungsventil 690 mit der nicht gezeigten Trennkupplung K0 verbunden. Durch die Druckbeaufschlagung der Leitungen 68 und 668 wird mit dem Einlegen des Notfahrgangs D6 auch die Trennkupplung K0 geschlossen. Ein verbrennungsmotorisches Fahren ist nur möglich, wenn das Automatikgetriebe einen hydrodynamischen Drehmomentwandler aufweist. Der Druck an der Trennkupplung K0 kann geringer sein als die Kupplungsdrücke der Kupplungen 12, 15 und 19. Wird an dem Kupplungsventil 690 der Trennkupplung K0 ein zwei Blenden 691 und 692 umfassender Druckteiler vorgesehen, sinkt der Druck zwischen den Blenden 691 und 692 in der Leitung 668 und im Kupplungsventil 690 sowie in der Trennkupplung K0 und damit die Belastung der entsprechenden Bauteile.

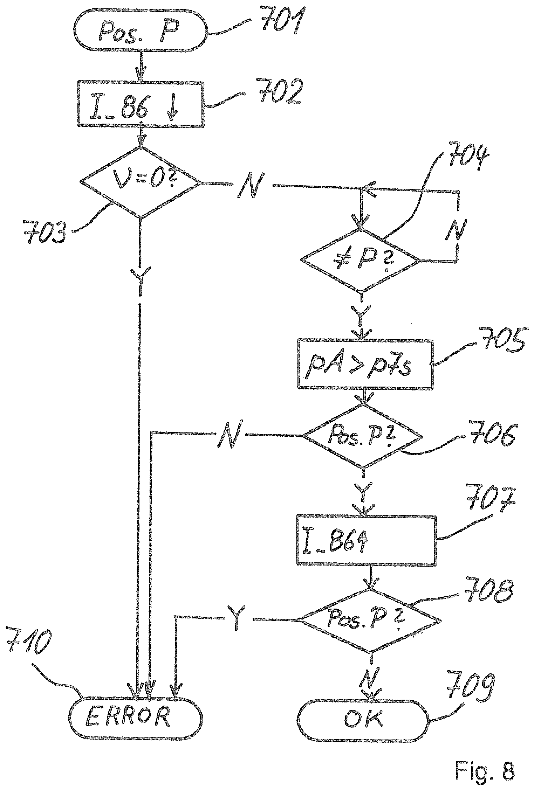

Fig. 8 zeigt ein Ablaufdiagramm eines Diagnoseverfahrens für das Ventilsystem 1 in Fig. 1. Das Ventilsystem 1 umfasst wie unter Fig. 1 beschrieben den elektromagnetischen Druckregler 86, das Positionsventil 104, das Notlaufventil 103 und das elektromagnetische Schaltventil 82. Zur Überprüfung, ob das Ventilsystem 1 in Position P in deaktivierter Stellung steht, d.h. kein Notfahrgang D6 wird angesteuert, wird in Position P folgendes Ablaufschema zur Diagnose vorgeschlagen:
In einem Startschritt 701 wird die Parksperrenposition P eingelegt. In einem Operationsschritt 702 wird der Druck, den der elektromagnetische Druckregler 86 ausgibt durch Absenken eines Druckreglerstroms I_86 erhöht. Mittels einer Drehzahlsensorik wird das Drehzahlverhältnis nue, auch als Wandlerschlupf bezeichnet, als Verhältnis aus Turbinendrehzahl zu Pumpendrehzahl (nue = nT/nP) für einen Entscheidungsschritt 703 beobachtet. Ist der Notfahrgang D6 fehlerhaft in Position P aktiviert, d.h. der Kolbenschieber 120 steht in der zweiten Schaltstellung, führt dies in Kombination mit den regulär druckbeaufschlagten Kupplungen 8 und 10 zu einem blockierten Getrieberadsatz, wodurch die Turbinendrehzahl nT auf 0 1/min abgesenkt wird und damit das Drehzahlverhältnis nT/nP = 0 wird. Hiermit liegt als Ergebnis 710 ein nicht näher spezifizierter Fehler im Notlaufventilsystem vor, welcher als Getriebefehler dem Fahrer kommuniziert und über entsprechende Ersatzmaßnahmen behandelt wird. Ersatzmaßnahme kann eine eingeschränkte Getriebefunktion sein oder wie in diesem Fall empfohlen, ein Festsetzen des Fahrzeugs in Position P.

Ist jedoch kein Kraftschluss im Automatikgetriebe über das Drehzahlverhältnis nue erkennbar, d.h. nue = nT/nP ist ungleich Null oder 0 < nT/nP < 1, erfolgen die nächsten Diagnoseschritte erst mit Verlassen der Position P durch Fahrerwunsch, was in einem Entscheidungsschritt 704 abgefragt wird. Wird durch Fahrerwunsch die Parksperrenposition P verlassen, wird zu Diagnosezwecken, abweichend vom normalen Ablauf, in einem Operationsschritt 705 bei stromlosem elektromagnetischem Druckregler 86 die Kupplung 8 auf einen Kupplungsdruck pA gebracht, der höher ist als ein Schaltdruck p7s des Parksperrenventils 7, und das Signal des Parksperrenpositionssensors wird für einen Entscheidungsschritt 706 ausgewertet. Unter dem Schaltdruck p7s ist ein Druckwert zu verstehen, ab dem das Parksperrenventil 7 in eine Schaltstellung gebracht wird, in welchem die Parksperre ausgelegt ist. Wird die Parksperre ausgelegt, d.h. die Position P wird verlassen, liegt als Ergebnis 710 ein Fehler vor. Bleibt die Parksperre innerhalb eines definierten Zeitfensters in der Position P stehen, dann ist die Funktion des Notlaufsystems entsprechend der Position P bis dahin fehlerfrei und es kann in einem Operationsschritt 707 mit der Diagnosefunktion fortgefahren werden, indem die Parksperre durch Abschalten des elektromagnetischen Druckreglers 86 in einen bestromten Zustand auf Auslegen überprüft wird. Das Zeitfenster ist abhängig von verschiedenen Parametern, wesentlich von z.B. Öltemperatur, Systemdruckhöhe und Druckhöhe Kupplung 8 und wird als Kennfeld hinterlegt. Wird in einem Entscheidungsschritt 708 vom Parksperrenpositionssensor erkannt, dass die Position P verlassen wurde, ist als Ergebnis 709 das Ventilsystem in Ordnung. Bleibt die Parksperre hierauf weiterhin eingelegt, liegt als Ergebnis 710 ein Fehler im Notlaufventilsystem vor.

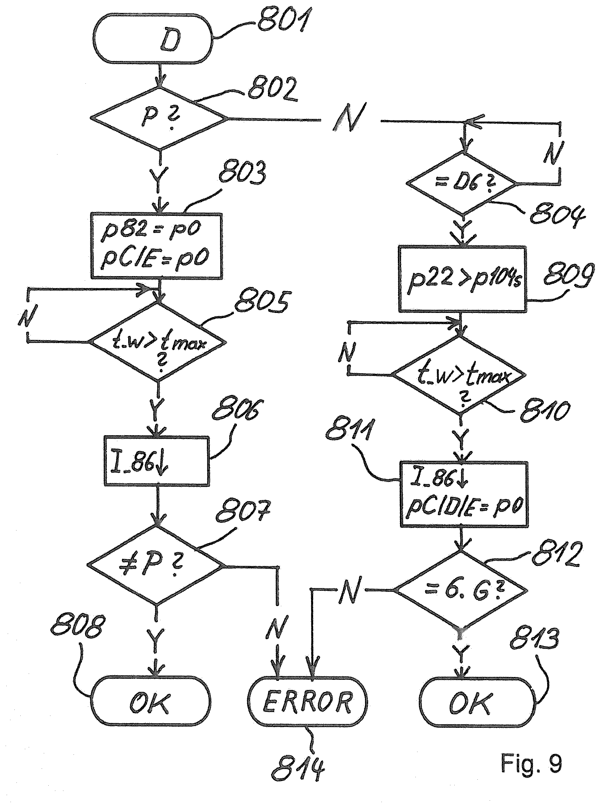

Fig. 9 zeigt ein Ablaufdiagramm eines weiteren Diagnoseverfahrens für ein Ventilsystem 1. Hierbei wird in einem Startschritt 801 von einer Position D ausgegangen. Entspricht nun in einem Entscheidungsschritt 802 der Fahrerwunsch dem Einlegen der Position P, erfolgt in einem Operationsschritt 803 ein Entlüften sowohl des elektromagnetischen Schaltventils 82 als auch der Notfahr-Kupplungen 12 und 15, so dass der Kolbenschieber 120 des Positionsventils 104 in dessen erste Schaltstellung verschoben wird. Ist dies nach einer bestimmten Wartezeit erfolgt, wird in einem Operationsschritt 806 der elektromagnetische Druckregler 86 stromlos geschaltet, so dass ein Druckanstieg in der Leitung 29 erfolgt, wodurch durch die Leitung 32 das Parksperrenventil 7 druckbeaufschlagt wird und die Parksperre hierdurch eingelegt wird. Wird dies in einem Entscheidungsschritt 807 anhand des Signals des Parksperrenpositionssensors festgestellt, so ist als Ergebnis 808 das Ventilsystem 1 in Ordnung, bzw. der Kolbenschieber 120 in seiner ersten Schaltstellung. Erfolgt kein Signalwechsel im Parksperrenventil 7, wird als Ergebnis 814 ein Fehler im Notlaufsystem festgestellt.

Die Stellung des Kolbenschiebers 120 des Positionsventils 104 in Ausgangslage, wird mit jedem Einlegen der Parksperre über Druckbeaufschlagung des elektromagnetischen Druckreglers 86 automatisch mit Überwacht. Voraussetzung hierfür ist eine ausreichend vorhandene Druckversorgung im System, was üblicherweise beim Einlegen der Parksperre bei laufendem Verbrennungsmotor oder laufender elektrischer Zusatzölpumpe (IEP) der Fall ist. Zudem kann davon ausgegangen werden, dass die Position P nur über Bremspedalbetätigung einlegbar ist, d.h. der Fahrer steht mit einem Fuß auf der Bremse und kann im Fehlerfall eingreifen.

Ist der Kolbenschieber 120 des Positionsventils 104 fehlerhaft in die zweite Schaltstellung geschoben, was z.B. durch Klemmen aufgrund von Verschmutzung oder einem fehlerhaft bedrucktem elektrischem Schaltventil 82 der Fall sein kann, bewirkt eine Druckbeaufschlagung des elektromagnetischen Druckreglers 86 nicht das gewünschte Einlegen der Parksperre, was über den Parksperrenpositionssensor überwacht werden kann, sondern führt zum Auslösen des hydr. Notfahrgangs D6, da durch die Fehlstellung des Kolbenschiebers 120 des Positionsventils 104 in der zweiten Schaltstellung das Notlaufventil 103 mit seiner Leitung 36 mit der Arbeitsdruckleitung 29 des elektromagnetischen Druckreglers 86 verbunden ist und betätigt wird. Es wird hier vorausgesetzt, dass die übliche Entleerzeit der Kupplungen 12 und 15 verstrichen ist und die hydraulische Selbsthaltung des Positionsventils 104 damit nicht mehr gewährleistet ist. Wird somit nach Druckbeaufschlagung des elektromagnetischen Druckreglers 86 nicht innerhalb eines definierten Zeitfensters am Parksperrenpositionssensor ein Positionswechsel rückgemeldet, liegt ein Fehler im Notlaufventilsystem 1 vor.

Das Zeitfenster ist abhängig von verschiedenen Parametern, wesentlich von z.B. Öltemperatur, Systemdruckhöhe und Druckhöhe Kupplung 8 und wird als Kennfeld hinterlegt.

Entspricht der Fahrerwunsch im Entscheidungsschritt 802 nicht dem Einlegen der Parksperre bzw. der Position P, so wird in einem Entscheidungsschritt 804 überprüft, ob die Position D6 gewünscht ist. Ein zweiter Diagnosepfad wird dann ausgehend von dem Entscheidungsschritt 804 nur in der kraftschlüssigen Fahrposition D6 ausgeführt (Y). Zunächst wird sichergestellt, dass der Kolbenschieber 120 in seiner, entgegen der Kraft der Feder 121 umgeschobenen zweiten Schaltstellung stehen bleibt, indem in einem Operationsschritt 809 mindestens einer der beiden Kupplungsdrücke pC oder pE, welcher in der Leitung 22 als Leitungsdruck p22 wirksam ist, auf einem Druckniveau oberhalb eines Haltedrucks p104s für das Positionsventil 104 angesteuert ist. Nach einer abgelaufenen Wartezeit in einem Entscheidungsschritt 810 wird in einem Operationsschritt 811 der elektromagnetische Druckregler 86 auf Druck angesteuert indem dessen Strom I_86 abgesenkt wird, und mindestens eine der Fahrkupplungen C, D oder E des 6. Gangs drucklos angesteuert. Unter der Wirkung des vom elektrischen Druckregler erzeugten Druckes müsste sich jetzt das Notlaufventil 103 in dessen zweiter Schaltstellung entgegen der Kraft der Feder 34 befindlich sein, so dass die Kupplungen 12, 15 und 19 unter dem Druck in der Leitung 44 geschlossen werden, auch wenn deren Kupplungsventile stromlos sind. Entspricht nun das Drehzahlverhältnis zwischen Antrieb und Abtriebsdrehzahl dem Übersetzungsverhältnis des 6. Gangs, ist das Notlaufventilsystem i.O., andernfalls liegt ein Fehler vor, welcher entsprechend über Fahrermeldung und Ersatzmaßnahmen weiterbehandelt wird.

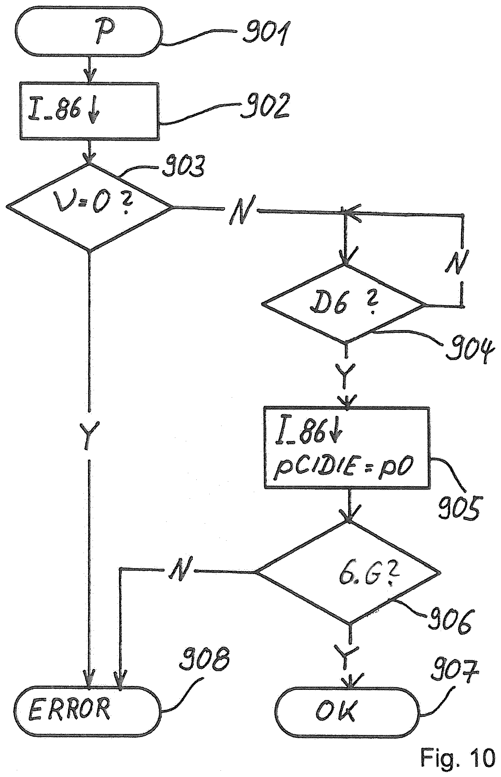

Fig. 10 zeigt ein Ablaufdiagramm eines Diagnoseverfahrens für ein Ventilsystem 5 oder 6. Ausgehend von einem Startschritt 901 in welchem die Position P eingelegt ist wird in einem Operationsschritt 902 der Druck nach dem elektromagnetischen Druckregler 586 in der Leitung 529 erhöht, indem der Strom I_586 des elektromagnetischen Druckreglers 586 reduziert oder abgeschaltet wird. In einem Entscheidungsschritt 903 wird anhand der Signale von Turbinendrehzahl nT und Pumpenraddrehzahl nP ermittelt, ob das Drehzahlverhältnis nT/nP gleich oder ungleich Null ist. Ist das Drehzahlverhältnis gleich Null, bedeutet das, dass ein Blockieren des Automatikgetriebes vorliegt, indem mindestens 3 Schaltelemente geschlossen sind. Die führt zu einem Ergebnis 908, dass ein Fehler im Notlaufventilsystem vorliegt.

Liegt keine nennenswerte Differenzdrehzahl am hydrodynamischen Drehmomentwandler an, erfolgen die nächsten Diagnoseschritte erst mit eingelegter Position D6 nach einem Entscheidungsschritt 904.

Bei einem Positionswechsel nach D wird eine der Kupplungen 12 oder 15 mit einem Druck beaufschlagt, der höher ist als der Schaltdruck des Positionsventils 504 und der Notfahrgang damit hydraulisch gespeichert. Ist die Gangposition D6 erreicht, in welcher die Kupplungen 12, 19 und 15, und 19 (C, D und E) geschlossen sind, wird in einem Operationsschritt 905 der elektromagnetische Druckregler 586 druckbeaufschlagt und die Kupplungen 12, 19 und 15 über die Druckansteuerung der entsprechenden Druckregler im Ansteuerdruck auf Öffnen hin angesteuert. Dies kann rampenförmig oder sprunghaft erfolgen, wobei die Rampenform bei Vorliegen eines Fehlers für den Fahrer weniger spürbar und damit unauffälliger sein dürfte. In einem Entscheidungsschritt 906 wird nun das Verhältnis der Getriebeeingangs- zur Getriebeabtriebsdrehzahl ausgewertet. Entspricht dieses dem Übersetzungsverhältnis des 6. Gangs, ist das Ergebnis 907, dass das Notlaufsystem i.O. ist. Bei einem davon abweichenden Übersetzungsverhältnis ist als Ergebnis 908 von einem Fehler auszugehen, welcher entsprechend über Fahrermeldung und Ersatzmaßnahmen weiterbehandelt wird.

### Bezugszeichen

- 1: Ventilsystem
- 2: Ventilsystem
- 3: Ventilsystem
- 4: Ventilsystem
- 5: Ventilsystem
- 6: Ventilsystem
- 8: erste Kupplung
- 9: erstes Kupplungsventil
- 10: zweite Kupplung
- 11: zweites Kupplungsventil
- 12: erste Notfahrgang-Kupplung
- 13: drittes Kupplungsventil
- 14: erster Kupplungsventilschieber
- 15: zweite Notfahrgang-Kupplung
- 16: viertes Kupplungsventil
- 17: zweiter Kupplungsventilschieber
- 18: systemdruckführende Leitung
- 19: dritte Notfahrgang-Kupplung
- 21: fünftes Kupplungsventil
- 22: erste Leitung
- 23: achter Anschluss des Positionsventils
- 24: neunter Anschluss des Positionsventils
- 25: zweite Leitung
- 26: erste Blende
- 27: sechster Anschluss des Positionsventils
- 28: siebter Anschluss des Positionsventils
- 29: dritte Leitung
- 30: dritter Anschluss des Positionsventils
- 31: vierter Anschluss des Positionsventils
- 32: vierte Leitung
- 34: zweites Federelement
- 35: erster Anschluss des Notlaufventils
- 36: fünfte Leitung
- 37: zweite Blende
- 38: zweiter Anschluss des Positionsventils
- 39: Federraum innerhalb des Positionsventils
- 40: erster Anschluss des Positionsventils
- 41: sechste Leitung
- 42: sechster Anschluss des Notlaufventils
- 43: fünfter Anschluss des Notlaufventils
- 44: Vorbefüllleitung
- 45: dritter Anschluss des Notlaufventils
- 46: zweiter Anschluss des Notlaufventils
- 47: siebte Leitung
- 48: fünfter Anschluss des Positionsventils
- 49: siebter Anschluss des Notlaufventils
- 50: dritte Blende
- 51: vierter Anschluss des Notlaufventils
- 52: weitere Vorbefüllleitung
- 53: neunter Anschluss des Positionsventils
- 54: Entlüftungsanschluss
- 55: achte Leitung
- 56: vierte Blende
- 57: zehnter Anschluss des Positionsventils
- 58: achte Steuertasche des Positionsventils
- 60: vierter Anschluss des Positionsventils
- 61: dritter Anschluss des Positionsventils
- 64: fünfter Anschluss des Positionsventils
- 65: zehnte Leitung
- 66: fünfte Blende
- 67: Tankleitung
- 68: elfte Leitung
- 69: fünfter Anschluss des Positionsventils
- 70: sechster Anschluss des Positionsventils
- 71: Tankleitung
- 72: zwölfte Leitung
- 73: vierter Anschluss des Positionsventils
- 74: Blende
- 82: elektromagnetisches Schaltventil
- 85: hydraulisches ODER-Ventil
- 88: hydraulisches ODER-Ventil
- 103: Notlaufventil
- 104: Positionsventil
- 107: Parksperrenventil
- 120: erster Kolbenschieber
- 121: erstes Federelement
- 133: zweiter Kolbenschieber
- 186: elektromagnetischer Druckregler
- 203: Notlaufventil
- 204: Positionsventil
- 220: erster Kolbenschieber
- 221: erstes Federelement
- 233: zweiter Kolbenschieber
- 259: neunte Leitung
- 262: Federraum innerhalb des Positionsventils
- 263: erster Anschluss des Positionsventils
- 286: elektromagnetischer Druckregler
- 303: Notlaufventil
- 304: Positionsventil
- 320: erster Kolbenschieber
- 321: erstes Federelement
- 359: neunte Leitung
- 362: Federraum innerhalb des Positionsventils
- 363: erster Anschluss des Positionsventils
- 404: Positionsventil
- 420: erster Kolbenschieber
- 421: erstes Federelement
- 504: Positionsventil
- 507: Parksperrenventil
- 520: erster Kolbenschieber
- 521: erstes Federelement
- 526: erste Druckteilerblende
- 529: dritte Leitung
- 537: zweite Druckteilerblende
- 557: erster Anschluss Positionsventil
- 558: zweiter Anschluss Positionsventil
- 559: dritter Anschluss Positionsventil
- 561: vierter Anschluss Positionsventil
- 563: fünfter Anschluss Positionsventil
- 565: zehnte Leitung
- 567: Tankleitung
- 586: elektromagnetischer Druckregler
- 596: Parksperren-Magnetventil
- 629: dritte Leitung
- 665: zehnte Leitung
- 668: dreizehnte Leitung
- 690: Kupplungsventil Trennkupplung K0
- 691: dritte Druckteilerblende
- 692: vierte Druckteilerblende
- 693: Leitung K0
- 701: Startschritt
- 702: Operationsschritt
- 703: Entscheidungsschritt
- 704: Entscheidungsschritt
- 705: Operationsschritt
- 706: Entscheidungsschritt
- 707: Operationsschritt
- 708: Entscheidungsschritt
- 709: Ergebnis
- 710: Ergebnis
- 801: Startschritt
- 802: Entscheidungsschritt
- 803: Operationsschritt
- 804: Entscheidungsschritt
- 805: Entscheidungsschritt
- 806: Operationsschritt
- 807: Entscheidungsschritt
- 808: Ergebnis
- 809: Operationsschritt
- 810: Entscheidungsschritt
- 811: Operationsschritt
- 812: Entscheidungsschritt
- 813: Ergebnis
- 814: Ergebnis
- 901: Startschritt
- 902: Operationsschritt
- 903: Entscheidungsschritt
- 904: Entscheidungsschritt
- 905: Operationsschritt
- 906: Entscheidungsschritt
- 907: Ergebnis
- 908: Ergebnis
- I_86: Strom elektromagnetischer Druckregler 86
- nP: Pumpendrehzahl (hydrodynamischer Drehmomentwandler)
- nT: Turbinendrehzahl (hydrodynamischer Drehmomentwandler)
- p_0: Umgebungsdruck, druckloser Zustand
- pA: Kupplungsdruck A der Kupplung 8
- pC: Kupplungsdruck C der Notfahrgang-Kupplung 12
- pD: Kupplungsdruck D der Notfahrgang-Kupplung 19
- pE: Kupplungsdruck E der Notfahrgang-Kupplung 15
- pSYS: Systemdruck
- nue: Drehzahlverhältnis nue = nT/nP

## Patentansprüche

1. Ventilsystem für eine hydraulische Notfahrgangfunktion eines Kraftfahrzeug-Automatikgetriebes, das Ventilsystem umfassend:
- ein Positionsventil (104) mit einem ersten Kolbenschieber (120) und
- einen elektromagnetischen Druckregler (86) mit fallender Kennliniencharakteristik, wobei
- der erste Kolbenschieber (120) in eine erste Stellung und in eine zweite Stellung gebracht werden kann, wobei der erste Kolbenschieber (120) in der ersten Stellung vorgespannt ist, und
- wenn sich der erste Kolbenschieber (120) in der zweiten Stellung befindet, der elektromagnetische Druckregler (86) dazu eingerichtet ist, eine systemdruckführende Leitung (18) des Kraftfahrzeug-Automatikgetriebes mit mindestens einer ersten Notfahrgang-Kupplung (12) des Kraftfahrzeug-Automatikgetriebes und mit einer zweiten Notfahrgang-Kupplung (15) des Kraftfahrzeug-Automatikgetriebes zu verbinden, wodurch die erste Notfahrgang-Kupplung (12) und die zweite Notfahrgang-Kupplung (15) betätigt werden, so dass ein Notfahrgang des Kraftfahrzeug-Automatikgetriebes eingelegt ist, **dadurch gekennzeichnet, dass** das Ventilsystem ein ODER-Ventil (85) umfasst,
wobei das ODER-Ventil (85) dazu eingerichtet ist, entweder die erste Notfahrgang-Kupplung (12) oder die zweite Notfahrgang-Kupplung (15) hydraulisch mit dem Positionsventil (104) zu verbinden, sodass der erste Kolbenschieber (120) in der zweiten Stellung gehalten wird.

2. Ventilsystem nach Anspruch 1, das Ventilsystem weiterhin umfassend ein Notlaufventil (103) mit einem zweiten Kolbenschieber (133),
wobei
- der zweite Kolbenschieber (133) in eine erste Stellung und in eine zweite Stellung gebracht werden kann, wobei der zweite Kolbenschieber (133) in der ersten Stellung vorgespannt ist, und
- wenn sich der erste Kolbenschieber (120) in der zweiten Stellung befindet, der elektromagnetische Druckregler (86) über das Positionsventil (104) mit dem Notlaufventil (103) hydraulisch verbunden und dazu eingerichtet ist, in einem unbestromten Zustand den zweiten Kolbenschieber (133) hydraulisch mit Druck zu beaufschlagen, so dass der zweite Kolbenschieber (133) entgegen der Vorspannung in die zweite Stellung gebracht wird, wodurch die systemdruckführende Leitung (18) mit der ersten Notfahrgang-Kupplung (12) und mit der zweiten Notfahrgang-Kupplung (15) verbunden wird, wodurch die erste Notfahrgang-Kupplung und die zweite Notfahrgang-Kupplung betätigt werden, sodass der Notfahrgang des Kraftfahrzeug-Automatikgetriebes eingelegt ist.

3. Ventilsystem nach Anspruch 1, das Ventilsystem weiterhin umfassend:
- wenigstens ein erstes oder zweites Kupplungsventil (9, 11) zur Betätigung einer weiteren Kupplung (8, 10), mittels welcher Nicht-Notfahrgänge des Kraftfahrzeug-Automatikgetriebes eingelegt werden können,
- ein drittes Kupplungsventil (13) mit einem ersten Kupplungsventilschieber (14) und
- mindestens ein viertes Kupplungsventil (16) mit einem zweiten Kupplungsventilschieber (17),
wobei
- der erste Kupplungsventilschieber (14) und der zweite Kupplungsventilschieber (17) jeweils in eine erste Stellung und in eine zweite Stellung gebracht werden können, wobei der erste Kupplungsventilschieber (14) und der zweite Kupplungsventilschieber (17) jeweils in ihrer ersten Stellung vorgespannt sind, und
- wenn sich der erste Kolbenschieber (120) in der zweiten Position befindet, der elektromagnetische Druckregler (86) mindestens mit dem dritten Kupplungsventil (13) und mit dem vierten Kupplungsventil (16) hydraulisch verbunden und dazu eingerichtet ist, in einem unbestromten Zustand den ersten Kupplungsventilschieber (14) und den zweiten Kupplungsventilschieber (17) hydraulisch mit Druck zu beaufschlagen, so dass der erste Kupplungsventilschieber (14) und der zweite Kupplungsventilschieber (17) entgegen der Vorspannung jeweils in ihre zweite Stellung gebracht werden, wodurch die systemdruckführende Leitung (18) mindestens mit der ersten Notfahrgang-Kupplung (12) und mit der zweiten Notfahrgang-Kupplung (15) verbunden wird, wodurch die erste Notfahrgang-Kupplung (12) und die zweite Notfahrgang-Kupplung (15) betätigt werden, so dass der Notfahrgang eingelegt ist.

4. Ventilsystem nach einem der vorstehenden Ansprüche, das Ventilsystem weiterhin umfassend ein elektromagnetisches Schaltventil (82), wobei das elektromagnetische Schaltventil (82) mit dem Positionsventil (104) hydraulisch verbunden und dazu eingerichtet ist, in einem bestromten Zustand den ersten Kolbenschieber (120) hydraulisch mit Druck zu beaufschlagen, sodass der erste Kolbenschieber (120) entgegen der Vorspannung in die zweite Stellung gebracht wird.

5. Ventilsystem nach Anspruch 4, wobei das ODER-Ventil (85) derart mit dem Positionsventil (104) verbunden ist, sodass der erste Kolbenschieber (120) in der zweiten Stellung gehalten wird, wenn das elektromagnetische Schaltventil (82) sich in einem unbestromten Zustand befindet und den ersten Kolbenschieber (120) nicht hydraulisch mit Druck beaufschlagt.

6. Ventilsystem nach einem der Ansprüche 1 bis 4, wobei das ODER-Ventil (85) derart mit dem Positionsventil (104) verbunden ist, sodass der erste Kolbenschieber (120) hydraulisch mit Druck beaufschlagt wird und sich entgegen der Vorspannung in die zweite Stellung bewegt.

7. Ventilsystem nach einem der vorstehenden Ansprüche, das Ventilsystem weiterhin umfassend ein Parksperrenventil (7), wobei der elektromagnetische Druckregler (86) dazu eingerichtet ist, dass Parksperrenventil (107) zu betätigen, wenn sich der erste Kolbenschieber (120) in der ersten Stellung befindet.

8. Ventilsystem nach Anspruch 2 oder nach Anspruch 2 und einem der Ansprüche 4 bis 7, das Ventilsystem weiterhin umfassend wenigstens ein erstes oder zweites Kupplungsventil (9, 11) zur Betätigung einer weiteren Kupplung (8, 10), mittels welcher Nicht-Notfahrgänge des Kraftfahrzeug-Automatikgetriebes eingelegt werden können, wobei das Ventilsystem dazu eingerichtet ist, das wenigstens erste oder zweite Kupplungsventil (9, 11) mit der systemdruckführenden Leitung (18) zu verbinden, wenn sich der erste Kolbenschieber (120) und der zweite Kolbenschieber (133) jeweils in ihrer ersten Stellung befinden.

9. Ventilsystem nach einem der vorstehenden Ansprüche, das Ventilsystem weiterhin umfassend wenigstens das erste oder zweite Kupplungsventil (9, 11) zur Betätigung einer weiteren Kupplung (8, 10), mittels welcher Nicht-Notfahrgänge des Kraftfahrzeug-Automatikgetriebes eingelegt werden können, wobei das wenigstens erste oder zweite Kupplungsventil (9, 11) dauerhaft mit der systemdruckführenden Leitung (18) verbunden ist.

10. Ventilsystem nach einem der vorstehenden Ansprüche, wobei der elektromagnetische Druckregler (86) dazu eingerichtet ist, in einem Federraum (262) des Positionsventils (204) einen hydraulischen Druck aufzubauen, welcher die Vorspannkraft erhöht, die den ersten Kolbenschieber (220) in der ersten Position hält.

11. Ventilsystem nach Anspruch 10, wobei der Federraum (362) über zumindest eine Blende (66) mit einem drucklosen Tank verbunden ist, so dass der hydraulische Druck innerhalb des Federraums (362) auf ein niedrigeres Druckniveau abgesenkt werden kann.

12. Ventilsystem nach Anspruch 11, wobei in der neunten Leitung (359) zwischen dem Federraum (362) und dem elektromagnetischen Druckregler (86) eine Blende (74) angeordnet ist.

13. Ventilsystem nach einem der Ansprüche 6 oder 9 und einem der Ansprüche 1 oder 3, **dadurch gekennzeichnet, dass** das Positionsventil (504) sechs Anschlüsse (557, 553, 558, 559, 561, 563) aufweist, und der elektromagnetische Druckregler (86) mit dem vierten Anschluss (561) des Positionsventils (504) hydraulisch verbunden ist und dass eine elfte Leitung (68) und damit zumindest ein Kupplungsventil (13, 16, 21) einer Notfahrgang-Kupplung (12, 15, 19) mit dem dritten Anschluss (559) des Positionsventils (504) verbunden ist, wobei der dritte Anschluss (559) auch durch eine zweite Druckteilerblende (537) mit einer Tankleitung (567) verbunden ist, wobei in der zweiten Schaltstellung des Kolbenschiebers (520) der dritte Anschluss (559) mit dem vierten Anschluss (561) verbunden ist, so dass sich bei einer Druckbeaufschlagung einer dritten Leitung (529) durch den elektromagnetischen Druckregler (86) eine Strömung vom elektromagnetischen Druckregler (86) zur Tankleitung (567) ausbildet, wobei durch die Druckverluste an den Druckteilerblenden (526, 537) der Druck in der elften Leitung (68) geringer ist als zwischen dem elektromagnetischen Druckregler (86) und der ersten Druckteilerblende (526).

14. Ventilsystem nach Anspruch 13, **dadurch gekennzeichnet, dass** zwischen mindestens einem der Kupplungsventile (13, 16, 21) der Notfahrgang-Kupplungen (12, 15, 19) und einem bestimmten Anschluss eines fünften Kupplungsventils (690) eine dritte Druckteilerblende (691) und zwischen diesem bestimmten Anschluss und einer Entlüftung oder einem Tank eine vierte Druckteilerblende (692) angeordnet ist, so dass der Druck in dem bestimmten Anschluss des fünften Kupplungsventils (690) geringer ist als in mindestens einem der Kupplungsventilen (13, 16, 21) der Notfahrgangventile (12, 15, 19).

15. Ventilsystem nach Anspruch 14, **dadurch gekennzeichnet, dass** das fünfte Kupplungsventil (690) zur Einstellung des Druckes in einer Trennkupplung (K0) vorgesehen ist.

16. Verfahren zur Diagnose eines Ventilsystems nach Anspruch 7 , **dadurch gekennzeichnet, dass** ausgehend von der Parksperrenposition (P) der von dem elektromagnetischen Druckregler (86) ausgegebene Druck erhöht wird und bei einem gemessenen Drehzahlverhältnis (nue = nT/nP) ungleich Null am Drehmomentwandler nach einem Verlassen der Parksperrenposition (P) nach einer Erhöhung eines auf das Parksperrenventil (107) auslegend wirkenden Kupplungsdrucks anhand eines Signals eines Parksperrensensors überprüft wird, ob sich der Kolbenschieber (120) in der ersten Schaltstellung befindet.

17. Verfahren zur Diagnose eines Ventilsystems nach Anspruch 4 oder nach Anspruch 4 und einem der Ansprüche 5 oder 6, **dadurch gekennzeichnet, dass** ausgehend von einer Fahrstellung (D) abhängig davon ob ein Fahrerwunsch nach einem Einlegen der Parksperrenposition (P) entspricht oder nicht jeweils ein Diagnosepfad verfolgt wird, wobei bei einem Wunsch nach der Parksperrenposition (P) in einem ersten Diagnosepfad nach dem Entlüften mindestens einer Notfahrgang-Kupplung (12, 15) und eines elektromagnetischen Schaltventils (82) und einer Erhöhung des von dem elektromagnetischen Druckregler (86) ausgegebenen Drucks anhand des Signals eines Parksperrensensors überprüft wird, ob sich der Kolbenschieber (120) in der ersten Schaltstellung befindet, oder wenn ein anderer Fahrerwunsch als die Parksperrenposition (P) vorliegt in einem zweiten Diagnosepfad nach dem Einlegen einer bestimmten Fahrposition (D6) nach einer Erhöhung des Druckes einer Notfahrgang-Kupplung (12, 15) über einen Schaltdruck des Positionsventils (104) und einer Erhöhung des von dem elektromagnetischen Druckregler (86) ausgegebenen Drucks sowie der Entlüftung mindestens einer Notfahrgang-Kupplung (12, 15) anhand der Überprüfung der eingestellten Getriebeübersetzung festgestellt wird, ob sich der Kolbenschieber (120) in der ersten Schaltstellung befindet.

18. Verfahren zur Diagnose eines Ventilsystems nach einem der Ansprüche 9 bis 15, **dadurch gekennzeichnet, dass** ausgehend von der Parksperrenposition (P) der von dem elektromagnetischen Druckregler (86) ausgegebene Druck erhöht wird und bei einem gemessenen Drehzahlverhältnis (nue = nT/nP) ungleich Null am Drehmomentwandler nach einem Einlegen einer bestimmten Fahrstufe (D6) nach einer Erhöhung des von dem elektromagnetischen Druckregler (86) ausgegebene Drucks und der Entlüftung der Notfahrgang-Kupplungen (12, 15, 19) überprüft wird, ob die bestimmte Fahrstufe (D6) als Notfahr-Gangstufe eingelegt ist, wobei anhand einer positiven Überprüfung festgestellt wird, ob sich der Kolbenschieber (520) des Positionsventils (504) richtigerweise in der zweiten Schaltstellung befindet.

19. Kraftfahrzeug-Automatikgetriebe umfassend ein Ventilsystem nach einem der Ansprüche 1 bis 15.

20. Kraftfahrzeug umfassend ein Kraftfahrzeug-Automatikgetriebe nach Anspruch 19.

## Claims

1. Valve system for a hydraulic emergency drive gear function of a motor vehicle automatic transmission, the valve system comprising:
- a position valve (104) with a first piston slide (120) and
- an electromagnetic pressure controller (86) with a falling characteristic, wherein
- the first piston slide (120) can be moved to a first position and to a second position, wherein the first piston slide (120) is prestressed in the first position and
- when the first piston slide (120) is in the second position the electromagnetic pressure controller (86) is designed to connect a system pressure-carrying line (18) of the motor vehicle automatic transmission to at least one emergency drive gear clutch (12) of the motor vehicle automatic transmission and to a second emergency drive gear clutch (15) of the motor vehicle automatic transmission, as a result of which the first emergency drive gear clutch (12) and the second emergency drive gear clutch (15) are operated, so that an emergency drive gear of the motor vehicle automatic transmission is engaged, **characterized in that** the valve system comprises an OR valve (85), wherein the OR valve (85) is designed to hydraulically connect either the first emergency drive gear clutch (12) or the second emergency drive gear clutch (15) to the position valve (104), so that the first piston slide (120) is held in the second position.

2. Valve system according to Claim 1, the valve system further comprising an emergency running valve (103) with a second piston slide (133),
wherein
- the second piston slide (133) can be moved to a first position and to a second position, wherein the second piston slide (133) is prestressed in the first position and
- when the first piston slide (120) is in the second position the electromagnetic pressure controller (86) is hydraulically connected to the emergency running valve (103) by means of the position valve (104) and in a deenergized state is designed to hydraulically apply pressure to the second piston slide (133), so that the second piston slide (133) is moved to the second position counter to the prestress, as a result of which the system pressure-carrying line (18) is connected to the first emergency drive gear clutch (12) and to the second emergency drive gear clutch (15), as a result of which the first emergency drive gear clutch and the second emergency drive gear clutch are operated, so that the emergency drive gear of the motor vehicle automatic transmission is engaged.

3. Valve system according to Claim 1, the valve system further comprising:
- at least one first or second clutch valve (9, 11) for operating a further clutch (8, 10), by means of which non-emergency drive gears of the motor vehicle automatic transmission can be engaged,
- a third clutch valve (13) with a first clutch valve slide (14) and
- at least one fourth clutch valve (16) with a second clutch valve slide (17),
wherein
- the first clutch valve slide (14) and the second clutch valve side (17) can each be moved to a first position and to a second position, wherein the first clutch valve slide (14) and the second clutch valve slide (17) are each prestressed in their first position and
- when the first piston slide (120) is in the second position the electromagnetic pressure controller (86) is hydraulically connected at least to the third clutch valve (13) and to the fourth clutch valve (16) and in a deenergized state is designed to hydraulically apply pressure to the first clutch valve slide (14) and the second clutch valve slide (17), so that the first clutch valve slide (14) and the second clutch valve slide (17) are each moved to their second position counter to the prestress, as a result of which the system pressure-carrying line (18) is connected at least to the first emergency drive gear clutch (12) and the second emergency drive gear clutch (15), as a result of which the first emergency drive gear clutch (12) and the second emergency drive gear clutch (15) are operated, so that the emergency drive gear is engaged.

4. Valve system according to one of the preceding claims, the valve system further comprising an electromagnetic switching valve (82), wherein the electromagnetic switching valve (82) is hydraulically connected to the position valve (104) and in an energized state is designed to hydraulically apply pressure to the first piston slide (120), so that the first piston slide (120) is moved to the second position counter to the prestress.

5. Valve system according to Claim 4, wherein the OR valve (85) is connected to the position valve (104) in such a way that the first piston slide (120) is held in the second position when the electromagnetic switching valve (82) is in a deenergised state and does not hydraulically apply pressure to the first piston slide (120) .

6. Valve system according to one of Claims 1 to 4, wherein the OR valve (85) is connected to the position valve (104) in such a way that pressure is hydraulically applied to the first piston slide (120) and the first piston slide is moved to the second position counter to the prestress.

7. Valve system according to one of the preceding claims, the valve system further comprising a parking lock valve (7), wherein the electromagnetic pressure controller (86) is designed to operate the parking lock valve (107) when first piston slide (120) is in the first position.

8. Valve system according to Claim 2 or according to Claim 2 and one of Claims 4 to 7, the valve system further comprising at least one first or second clutch valve (9, 11) for operating a further clutch (8, 10), by means of which non-emergency drive gears of the motor vehicle automatic transmission can be engaged, wherein the valve system is designed to connect the at least first or second clutch valve (9, 11) to the system pressure-carrying line (18) when the first piston slide (120) and the second piston slide (133) are each in their first position.

9. Valve system according to one of the preceding claims, the valve system further comprising at least the first or second clutch valve (9, 11) for operating a further clutch (8, 10), by means of which non-emergency drive gears of the motor vehicle automatic transmission can be engaged, wherein the at least first or second clutch valve (9, 11) is permanently connected to the system pressure-carrying line (18).

10. Valve system according to one of the preceding claims, wherein the electromagnetic pressure controller (86) is designed to build up a hydraulic pressure in a spring space (262) of the position valve (204), this hydraulic pressure increasing the prestressing force that holds the first piston slide (220) in the first position.

11. Valve system according to Claim 10, wherein the spring space (362) is connected to an unpressurized tank via at least one orifice (66), so that the hydraulic pressure within the spring space (362) can be reduced to a lower pressure level.

12. Valve system according to Claim 11, wherein an orifice (74) is arranged in the ninth line (359) between the spring space (362) and the electromagnetic pressure controller (86).

13. Valve system according to either of Claims 6 and 9 and either of Claims 1 and 3, **characterized in that** the position valve (504) has six connections (557, 553, 558, 559, 561, 563), and the electromagnetic pressure controller (86) is hydraulically connected to the fourth connection (561) of the position valve (504), and **in that** an eleventh line (68) and therefore at least one clutch valve (13, 16, 21) of an emergency drive gear clutch (12, 15, 19) is connected to the third connection (559) of the position valve (504), wherein the third connection (559) is also connected to a tank line (567) by a second pressure divider orifice (537), wherein, in the second switching position of the piston slide (520), the third connection (559) is connected to the fourth connection (561), so that, when pressure is applied to a third line (529) by the electromagnetic pressure controller (86), a flow forms from the electromagnetic pressure controller (86) to the tank line (567), wherein, owing to the pressure losses at the pressure divider orifice (526, 537), the pressure in the eleventh line (68) is lower than between the electromagnetic pressure controller (86) and the first pressure divider orifice (526).

14. Valve system according to Claim 13, **characterized in that** a third pressure divider orifice (691) is arranged between at least one of the clutch valves (13, 16, 21) of the emergency drive gear clutches (12, 15, 19) and a specific connection of a fifth clutch valve (690), and a fourth pressure divider orifice (692) is arranged between this specific connection and a vent or a tank, so that the pressure in the specific connection of the fifth clutch valve (690) is lower than in at least one of the clutch valves (13, 16, 21) of the emergency drive gear valves (12, 15, 19).

15. Valve system according to Claim 14, **characterized in that** the fifth clutch valve (690) is provided for setting the pressure in the separating clutch (K0).

16. Method for diagnosing a valve system according to Claim 7, **characterized in that**, starting from the parking lock position (P), the pressure output by the electromagnetic pressure controller (86) is increased and, given a measured rotation speed ratio (nue = nT/nP) that is not equal to zero at the torque converter, after leaving the parking lock position (P) after an increase in a clutch pressure having a disengaging effect on the parking lock valve (107), a check is made on the basis of a signal from a parking lock sensor as to whether the piston slide (120) is in the first switching position.

17. Method for diagnosing a valve system according to Claim 4 or according to Claim 4 and either of Claims 5 and 6, **characterized in that**, starting from a drive position (D), a respective diagnosis path is followed depending on whether a driver request for engagement corresponds to the parking lock position (P) or not, wherein, given a request for the parking lock position (P), a check is made as to whether the piston slide (120) is in the first switching position on the basis of the signal from a parking lock sensor in a first diagnosis path after venting at least one emergency drive gear clutch (12, 15) and an electromagnetic switching valve (82) and an increase in the pressure output by the electromagnetic pressure controller (86), or, if a driver request other than the parking lock position (P) is made, it is established whether the piston slide (120) is in the first switching position on the basis of checking the set gear transmission ratio in a second diagnosis path after a specific drive position (D6) is engaged after an increase in the pressure of an emergency drive gear clutch (12, 15) above a switching pressure of the position valve (104) and an increase in the pressure output by the electromagnetic pressure controller (86) and venting of at least one emergency drive gear clutch (12, 15).

18. Method for diagnosing a valve system according to one of Claims 9 to 15, **characterized in that**, starting from the parking lock position (P), the pressure output by the electromagnetic pressure controller (86) is increased, and, given a measured rotation speed ratio (nue = nT/nP) that is not equal to zero at the torque converter, after a specific drive stage (D6) is engaged after an increase in the pressure output by the electromagnetic pressure controller (86) and venting of the emergency drive gear clutches (12, 15, 19), a check is made as to whether the specific drive stage (D6) is engaged as an emergency drive gear stage, wherein it is established on the basis of a positive check whether the piston slide (520) of the position valve (504) is correctly in the second switching position.

19. Motor vehicle automatic transmission comprising a valve system according to one of Claims 1 to 15.

20. Motor vehicle comprising a motor vehicle automatic transmission according to Claim 19.

## Revendications

1. Système de soupapes pour une fonction hydraulique de vitesse de secours d'une transmission automatique de véhicule automobile, le système de soupapes comprenant :
- une soupape de position (104) dotée d'un premier tiroir à piston (120), et
- un régulateur de pression électromagnétique (86) à courbe caractéristique descendante, dans lequel
- le premier tiroir à piston (120) peut être amené dans une première position et dans une deuxième position, le premier tiroir à piston (120) étant précontraint dans la première position, et
- lorsque le premier tiroir à piston (120) se trouve dans la deuxième position, le régulateur de pression électromagnétique (86) est aménagé pour relier une conduite de pression du système (18) de la transmission automatique de véhicule automobile à au moins un premier couplage de vitesse de secours (12) de la transmission automatique de véhicule automobile et à un deuxième couplage de vitesse de secours (15) de la transmission automatique de véhicule automobile de moyennant quoi le premier couplage de vitesse de secours (12) et le deuxième couplage de vitesse de secours (15) sont actionnés de sorte qu'une vitesse de secours de la transmission automatique de véhicule automobile est enclenchée,
**caractérisé en ce que** le système de soupapes comprend une soupape OU (85), la soupape OU (85) étant aménagée pour relier hydrauliquement soit le premier couplage de vitesse de secours (12), soit le deuxième couplage de vitesse de secours (15) à la soupape de position (104) de sorte que le premier tiroir à piston (120) est maintenu dans la deuxième position.

2. Système de soupapes selon la revendication 1, le système de soupapes comprenant en outre une soupape de marche de secours (103) dotée d'un deuxième tiroir à piston (133),
dans lequel
- le deuxième tiroir à piston (133) peut être amené dans une première position et dans une deuxième position, le deuxième tiroir à piston (133) étant précontraint dans la première position, et
- lorsque le premier tiroir à piston (120) se trouve dans la deuxième position, le régulateur de pression électromagnétique (86) est relié hydrauliquement par la soupape de position (104) à la soupape de marche de secours (103), et est aménagé, dans un état non alimenté, pour mettre sous pression hydrauliquement le deuxième tiroir à piston (133) de sorte que le deuxième tiroir à piston (133) est amené dans la deuxième position contre la précontrainte, moyennant quoi la conduite de pression du système (18) est reliée au premier couplage de vitesse de secours (12) et au deuxième couplage de vitesse de secours (15), moyennant quoi le premier couplage de vitesse de secours et le deuxième couplage de vitesse de secours sont actionnés de sorte que la vitesse de secours de la transmission automatique de véhicule automobile est enclenchée.

3. Système de soupapes selon la revendication 1, le système de soupapes comprenant en outre :
- au moins une première et une deuxième soupape de couplage (9, 11) pour actionner un couplage supplémentaire (8, 10) qui permet d'enclencher des vitesses non de secours de la transmission automatique de véhicule automobile,
- une troisième soupape de couplage (13) dotée d'un premier tiroir de soupape de couplage (14), et
- au moins une quatrième soupape de couplage (16) dotée d'un deuxième tiroir de soupape de couplage (17), dans lequel
- le premier tiroir de soupape de couplage (14) et le deuxième tiroir de soupape de couplage (17) peuvent être amenés respectivement dans une première position et dans une deuxième position, le premier tiroir de soupape de couplage (14) et le deuxième tiroir de soupape de couplage (17) étant respectivement précontraints dans la première position, et
- lorsque le premier tiroir à piston (120) se trouve dans la deuxième position, le régulateur de pression électromagnétique (86) est relié hydrauliquement au moins à la troisième soupape de couplage (13) et à la quatrième soupape de couplage (16), et est aménagé, dans un état non alimenté, pour mettre sous pression hydrauliquement le premier tiroir de soupape de couplage (14) et le deuxième tiroir de soupape de couplage (17) de sorte que le premier tiroir de soupape de couplage (14) et le deuxième tiroir de soupape de couplage (17) sont amenés respectivement dans la deuxième position contre la précontrainte, moyennent qui la conduite de pression du système (18) est reliée au moins au premier couplage de vitesse de secours (12) et au deuxième couplage de vitesse de secours (15), moyennant quoi le premier couplage de vitesse de secours (12) et le deuxième couplage de vitesse de secours (15) sont actionnés de sorte que la vitesse de secours est enclenchée.

4. Système de soupapes selon l'une quelconque des revendications précédentes, le système de soupapes comprenant en outre une soupape de commutation électromagnétique (82), la soupape de commutation électromagnétique (82) étant reliée hydrauliquement à la soupape de position (104), et étant aménagée, dans un état non alimenté, pour mettre sous pression hydrauliquement le premier tiroir à piston (120) de sorte que le premier tiroir à piston (120) est amené dans la deuxième position contre la précontrainte.

5. Système de soupapes selon la revendication 4, dans lequel la soupape OU (85) est reliée à la soupape de position (104) de telle sorte que le premier tiroir à piston (120) est maintenu dans la deuxième position lorsque la soupape de commutation électromagnétique (82) se trouve dans un état non alimenté et ne met pas sous pression hydrauliquement le premier tiroir à piston (120).

6. Système de soupapes selon l'une quelconque des revendications 1 à 4, dans lequel la soupape OU (85) est reliée à la soupape de position (104) de telle sorte que le premier tiroir à piston (120) est mis sous pression hydrauliquement et se déplace dans la deuxième position contre la précontrainte.

7. Système de soupapes selon l'une quelconque des revendications précédentes, le système de soupapes comprenant en outre une soupape de frein de stationnement (7), le régulateur de pression électromagnétique (86) étant aménagé pour actionner la soupape de frein de stationnement (107) lorsque le premier tiroir à piston (120) se trouve dans la première position.

8. Système de soupapes selon la revendication 2, ou selon la revendication 2 et l'une quelconque des revendications 4 à 7, le système de soupapes comprenant en outre au moins une première ou une deuxième soupape de couplage (9, 11) pour actionner un couplage supplémentaire (8, 10) permettant d'enclencher des vitesses non de secours de la transmission automatique de véhicule automobile, le système de soupapes étant aménagé pour relier ladite au moins première ou deuxième soupape de couplage (9, 11) à la conduite de pression du système (18) lorsque le premier tiroir à piston (120) et le deuxième tiroir à piston (133) se trouvent respectivement dans la première position.

9. Système de soupapes selon l'une quelconque des revendications précédentes, le système de soupapes comprenant en outre au moins la première ou deuxième soupape de couplage (9, 11) pour actionner un couplage supplémentaire (8, 10) permettant d'enclencher des vitesses non de secours de la transmission automatique de véhicule automobile, ladite au moins première ou deuxième soupape de couplage (9, 11) étant reliée durablement à la conduite de pression du système (18).

10. Système de soupapes selon l'une quelconque des revendications précédentes, dans lequel le régulateur de pression électromagnétique (86) est aménagé pour établir dans un espace de ressort (262) de la soupape de position (204) une pression hydraulique qui augmente la force de précontrainte qui maintient le premier tiroir à piston (220) dans la première position.

11. Système de soupapes selon la revendication 10, dans lequel l'espace de ressort (362) est relié par au moins un obturateur (66) à un réservoir sans pression de sorte que la pression hydraulique à l'intérieur de l'espace de ressort (362) peut être abaissée à un niveau de pression inférieur.

12. Système de soupapes selon la revendication 11, dans lequel un obturateur (74) est disposé dans la neuvième conduite (359) entre l'espace de ressort (362) et le régulateur de pression électromagnétique (86).

13. Système de soupapes selon l'une quelconque des revendications 6 ou 9 et l'une quelconque des revendications 1 ou 3, **caractérisé en ce que** la soupape de position (504) présente six raccordements (557, 553, 558, 559, 561, 563), et le régulateur de pression électromagnétique (86) est relié hydrauliquement au quatrième raccordement (561) de la soupape de position (504), et **en ce qu'**une onzième conduite (68) et donc au moins une soupape de couplage (13, 16, 21) d'un couplage de vitesse de secours (12, 15, 19) est reliée au troisième raccordement (559) de la soupape de position (504), le troisième raccordement (559) étant également relié par un obturateur de division de pression (537) à une conduite de réservoir (567), dans lequel, dans la deuxième position de commutation du tiroir à piston (520), le troisième raccordement (559) est relié au quatrième raccordement (561) de sorte qu'en cas de mise sous pression d'une troisième conduite (529) par le régulateur de pression électromagnétique (86), un flux du régulateur de pression électromagnétique (86) à la conduite de réservoir (567) se forme, dans lequel, en raison des pertes de pression au niveau des obturateurs de diviseur de pression (526, 537), la pression dans la onzième conduite (68) est inférieure à celle entre le régulateur de pression électromagnétique (86) et le premier obturateur de diviseur de pression (526).

14. Système de soupapes selon la revendication 13, **caractérisé en ce qu'**un troisième obturateur de diviseur de pression (691) est disposé entre au moins l'une des soupapes de couplage (13, 16, 21) des couplages de vitesse de secours (12, 15, 19) et un raccordement déterminé d'une cinquième soupape de couplage (690), et un quatrième obturateur de diviseur de pression (692) est disposé entre ce raccordement déterminé et une purge ou un réservoir, de sorte que la pression dans le raccordement déterminé de la cinquième soupape de couplage (690) est inférieure à celle dans au moins l'une des soupapes de couplage (13, 16, 21) des soupapes de vitesse de secours (12, 15, 19).

15. Système de soupapes selon la revendication 14, **caractérisé en ce que** la cinquième soupape de couplage (690) est prévue pour régler la pression dans un couplage de séparation (K0).

16. Procédé de diagnostic d'un système de soupapes selon la revendication 7, **caractérisé en ce qu'**en partant de la position de frein de stationnement (P), la pression délivrée par le régulateur de pression électromagnétique (86) est augmentée, et pour un rapport de vitesse de rotation mesuré (nue = nT/nP) différent de zéro au niveau du convertisseur de couple, après avoir quitté la position de frein de stationnement (P) après une augmentation d'une pression de couplage agissant en excursion sur la soupape de frein de stationnement (107), il est vérifié à l'aide d'un signal d'un capteur de frein de stationnement si le tiroir à piston (120) se trouve dans la première position de commutation.

17. Procédé de diagnostic d'un système de soupapes selon la revendication 4, ou selon la revendication 4 et l'une quelconque des revendications 5 ou 6, **caractérisé en ce qu'**en partant d'une position de marche (D), en fonction du fait qu'un souhait de conducteur après enclenchement correspond ou non à la position de frein de stationnement (P), respectivement un chemin de diagnostic est emprunté,
dans lequel, en cas de souhait de la position de frein de stationnement (P), sur un premier chemin de diagnostic, après la purge d'au moins un couplage de vitesse de secours (12, 15) et d'une soupape de commutation électromagnétique (82) et une augmentation de la pression délivrée par le régulateur de pression électromagnétique (86), il est vérifié à l'aide du signal d'un capteur de frein de stationnement si le tiroir à piston (120) se trouve dans la première position de commutation, ou
si un souhait de conducteur autre que la position de frein de stationnement (P) est présent, sur un deuxième chemin de diagnostic, après l'enclenchement d'une position de marche déterminée (D6), après une augmentation de la pression d'un couplage de vitesse de secours (12, 15), par une pression de commutation de la soupape de position (104) et une augmentation de la pression délivrée par le régulateur de pression électromagnétique (86) ainsi que la purge d'au moins un couplage de vitesse de secours (12, 15), il est constaté à l'aide d'une vérification du rapport de transmission réglé si le tiroir de piston (120) se trouve dans la première position de commutation.

18. Procédé de diagnostic d'un système de soupapes selon l'une quelconque des revendications 9 à 15, **caractérisé en ce qu'**en partant de la position de frein de stationnement (P), la pression délivrée par le régulateur de pression électromagnétique (86) est augmentée, et pour un rapport de vitesse de rotation mesuré (nue = nT/nP) différent de zéro au niveau du convertisseur de couple, après enclenchement d'un rapport de marche déterminé (D6), après une augmentation de la pression délivrée par le régulateur de pression électromagnétique (86) et la purge des couplages de vitesse de secours (12, 15, 19), il est vérifie si le rapport de marche déterminé (D6) est enclenché comme un rapport de vitesse de secours, dans lequel, on constate à l'aide d'une vérification positive si le tiroir à piston (520) de la soupape de positon (504) se trouve correctement dans la deuxième position de commutation.

19. Transmission automatique de véhicule automobile, comprenant un système de soupapes selon l'une quelconque des revendications 1 à 15.

20. Véhicule automobile, comprenant une transmission automatique de véhicule automobile selon la revendication 19.
